# EUROPEAN PATENT APPLICATION

(11) **EP 4 622 230 A1**
(43) Date of publication of application: **24.09.2025**
(21) Application number: 24791682.8
(22) Date of filing: 18.01.2024
(51) Int. Cl.: H04M 1/72427, H04M 1/72451

(54) **NOTIFICATION DISPLAY METHOD AND ELECTRONIC DEVICE**

(30) Priority: 20.04.2023 CN 202310460548; 26.07.2023 CN 202310945845
(71) Applicant: Huawei Technologies Co., Ltd., Shenzhen, Guangdong 518129 (CN)
(72) Inventor: HUANG, Jing, Shenzhen, Guangdong 518129 (CN); YAO, Liying, Shenzhen, Guangdong 518129 (CN); LIU, Chunliang, Shenzhen, Guangdong 518129 (CN); DING, Chenpeng, Shenzhen, Guangdong 518129 (CN); WANG, Miao, Shenzhen, Guangdong 518129 (CN)
(74) Representative: Grünecker Patent- und Rechtsanwälte PartG mbB
(86) International application number: PCT/CN2024/073118
(87) International publication number: WO 2024/217094

(57) **Abstract**

This application provides a notification display method and an electronic device, and relates to the field of terminal technologies. In this application, the electronic device supports displaying indication information of a plurality of notifications in a status bar in a stacked manner, to meet a display requirement of a plurality of live notifications. The method includes: The electronic device displays a first interface, where the first interface includes a status bar on a top. The electronic device displays indication information of at least two notifications in the status bar in a stacked manner, where the indication information of the at least two notifications includes indication information of a first notification and indication information of a second notification, and the stacked manner includes that the indication information of the first notification partially or completely covers the indication information of the second notification, or the indication information of the second notification partially or completely covers the indication information of the first notification.

## Description

This application claims priorities to Chinese Patent Application No. 202310460548.3, filed with the China National Intellectual Property Administration on April 20, 2023 and entitled "LIVE NOTIFICATION METHOD, APPARATUS, AND DEVICE", and to Chinese Patent Application No. 202310945845.7, filed with the China National Intellectual Property Administration on July 26, 2023 and entitled "NOTIFICATION DISPLAY METHOD AND ELECTRONIC DEVICE", both of which are incorporated herein by reference in their entireties.

### TECHNICAL FIELD

Embodiments of this application relate to the field of terminal technologies, and in particular, to a notification display method and an electronic device.

### BACKGROUND

With development of terminal technologies, more applications are installed on an electronic device (for example, a mobile phone or a tablet computer), where the application may generate various types of notifications to indicate related content of the application. For example, a food delivery application may generate a plurality of notifications with a change of a delivery progress after a user places an order. The electronic device may display these notifications to help the user learn of the delivery progress.

However, because there are a large quantity of notifications, it is difficult for the user to pay attention to some high-timeliness notifications in a timely manner. In addition, if the user does not view the notifications until the notifications are displayed for a period of time, the notifications become invalid information, and the notifications are stacked in a notification center, affecting the user from obtaining other valid notifications.

### SUMMARY

To resolve the foregoing technical problems, this application provides a notification display method and an electronic device. According to the technical solution provided in this application, the electronic device supports displaying indication information of a plurality of notifications in a status bar in a stacked manner, to meet a display requirement of a plurality of live notifications.

To achieve the foregoing technical objective, this application provides the following technical solutions.

According to a first aspect, a notification display method is provided, and is applied to an electronic device. The method includes: displaying a first interface, where the first interface includes a status bar on a top; and displaying indication information of at least two notifications in the status bar in a stacked manner, where the indication information of the at least two notifications includes indication information of a first notification and indication information of a second notification, and the stacked manner includes that the indication information of the first notification partially or completely covers the indication information of the second notification, or the indication information of the second notification partially or completely covers the indication information of the first notification.

In this way, a plurality of notifications are displayed in the status bar in the stacked manner, so that display space of the status bar is saved while it is ensured that a user can detect the notifications in a timely manner.

According to the first aspect, before displaying the indication information of the at least two notifications in the status bar in the stacked manner, the method further includes: determining, according to a sorting rule, that the stacked manner of the indication information of the at least two notifications is that the indication information of the first notification partially or completely covers the indication information of the second notification, or the indication information of the second notification partially or completely covers the indication information of the first notification.

In this way, display priorities of different notifications are determined according to the sorting rule, to ensure that a notification with a higher display priority is preferentially displayed, and determine that the user can view the notification with the higher display priority in a timely manner.

According to the first aspect or any one of the foregoing implementations of the first aspect, the sorting rule includes one or more of the following rules: creation time of a notification, update time of a notification, an importance degree of a notification, a priority of a notification, historical data of a notification viewed by the user, or a notification sequence manually set by the user.

According to the first aspect or any one of the foregoing implementations of the first aspect, when the sorting rule is the update time of the notification, if update time of the first notification is later than update time of the second notification, it is determined that the stacked manner is that the indication information of the first notification partially or completely covers the indication information of the second notification; or if update time of the second notification is later than update time of the first notification, it is determined that the stacked manner is that the indication information of the second notification partially or completely covers the indication information of the first notification.

In this way, the electronic device exposes and displays a latest updated notification based on the update time of the notification, to ensure that the user can view the latest updated notification in a timely manner.

In some other examples, when the sorting rule is the importance degree of the notification, if an importance degree of the first notification is greater than or equal to an importance degree of the second notification, it is determined that the stacked manner is that the indication information of the first notification partially or completely covers the indication information of the second notification; or if an importance degree of the first notification is less than or equal to an importance degree of the second notification, it is determined that the stacked manner is that the indication information of the second notification partially or completely covers the indication information of the first notification.

Optionally, the electronic device determines the importance degree of the notification based on an importance degree of an application that generates the notification. For example, some important applications such as a call application are preset. In this case, after obtaining a notification of the call application, the electronic device may determine that an importance degree of the notification of the call application is higher than that of a notification currently displayed in the status bar, and the notification of the call application may partially or completely cover the notification currently displayed in the status bar.

Alternatively, the electronic device determines the importance degree of the notification based on a notification type. For example, an importance degree of a notification generated by an application of a preset application type is higher, or an importance degree of a notification generated based on updates (for example, updates on a status of a food delivery process) is higher.

In this way, the electronic device exposes and displays a notification with a higher importance degree based on the importance degree of the notification, to ensure that the user can view the notification with the higher importance degree in a timely manner.

In some other examples, when the sorting rule is the priority of the notification, if a priority of the first notification is higher than or equal to a priority of the second notification, it is determined that the stacked manner is that the indication information of the first notification partially or completely covers the indication information of the second notification; or if a priority of the first notification is lower than or equal to a priority of the second notification, it is determined that the stacked manner is that the indication information of the second notification partially or completely covers the indication information of the first notification.

Optionally, the electronic device may preset a priority sequence of notifications of different types of applications, a priority sequence of different types of notifications, and the like.

In this way, the electronic device exposes and displays a notification with a higher display priority based on the priority of the notification, to ensure that the user can view the notification with the higher priority in a timely manner.

According to the first aspect or any one of the foregoing implementations of the first aspect, when the indication information of the first notification partially covers the indication information of the second notification, it is detected that content of the second notification changes, and then the stacked manner is updated, so that the indication information of the second notification partially or completely covers the indication information of the first notification; or when the indication information of the second notification partially covers the indication information of the first notification, it is detected that content of the first notification changes, and then the stacked manner is updated, so that the indication information of the first notification partially or completely covers the indication information of the second notification.

According to the first aspect or any one of the foregoing implementations of the first aspect, the stacked manner is updated for an (N+1)^{th} time within preset duration after the stacked manner is updated for an N^{th} time, so that the stacked manner returns to a state before the stacked manner is updated for the N^{th} time, where N is a positive integer.

For example, the electronic device displays the indication information of the first notification and the indication information of the second notification in the status bar in the stacked manner, where the indication information of the first notification partially or completely covers the indication information of the second notification. Then, the electronic device determines that the content of the second notification changes, and the stacked manner needs to be updated for the first time. In this case, the electronic device may enable the indication information of the second notification to partially or completely cover the indication information of the first notification. Then, within the preset duration, the electronic device still needs to display the indication information of the first notification and the indication information of the second notification, and determines that the content of the first notification changes and the stacked manner needs to be updated for the second time. In this case, the electronic device may return the stacked manner to a state before the first update, for example, the indication information of the first notification partially or completely covers the indication information of the second notification.

In this way, the electronic device adjusts, based on a change status of a live notification, a display sequence of a plurality of displayed live notifications, to ensure display timeliness of the live notifications, and prevent the user from missing an important live notification.

In addition, when the display space is insufficient, the electronic device may temporarily hide some notifications or display some notifications in the stacked manner, so that the user can also view these notifications subsequently. In addition, the live notification has a high timeliness and a high update speed. Some notifications are first hidden or displayed in the stacked manner, so that the user can also be prevented from missing these notifications.

According to the first aspect or any one of the foregoing implementations of the first aspect, displaying the indication information of the at least two notifications in the status bar on the top in the stacked manner includes: when it is detected that a first preset condition corresponding to the first notification is met or when it is detected that a second preset condition corresponding to the second notification is met, displaying the indication information of the first notification or the indication information of the second notification in the status bar on the top.

According to the first aspect or any one of the foregoing implementations of the first aspect, the first preset condition or the second preset condition includes that predetermined time arrives, or that the content of the first notification or the content of the second notification is substantially updated.

For example, after determining that the live notification is received, the electronic device displays the live notification in the status bar.

For another example, an event A for which a live notification is generated is a predetermined occurrence event, and then the electronic device may display a live notification of the event A based on actual occurrence time of the event A. For example, the event A is a high-speed railway ticket booking event. If the high-speed railway ticket booking event occurrence time is five days before actual departure time, it can be learned that the electronic device may determine, based on the actual departure time, that the live notification of the event A is a predetermined live notification. In this case, the electronic device may display the live notification of the event A at delayed time. For example, if a preset rule is that a live notification corresponding to ticket information is displayed three hours before actual departure, the electronic device determines, based on actual departure time T1 and advance duration T2, that time for displaying the live notification is (T1-T2).

For another example, after determining that content of a notification is substantially updated, for example, updated content is generated after a preset node arrives, the electronic device notifies.

In this way, while it is ensured that the user views the notification in a timely manner, excessive useless notifications are not generated to affect the user.

According to the first aspect or any one of the foregoing implementations of the first aspect, the method further includes: displaying an interface of a first application; and in response to an operation performed by the user on the indication information of the at least two notifications displayed in the stacked manner, displaying detailed information about the first notification and/or detailed information about the second notification in the interface of the first application in a floating manner.

According to the first aspect or any one of the foregoing implementations of the first aspect, the detailed information is carried in a widget form.

In this way, based on a user requirement, the electronic device may display brief information of a notification by using a status bar capsule, or may display detailed information of a notification by using a widget. A user operation is simple and a display style is lightweight, to help the user consider continuity of an original task in different scenarios.

According to the first aspect or any one of the foregoing implementations of the first aspect, the method further includes: stopping displaying the indication information of the at least two notifications in the status bar on the top; and if a first operation for the detailed information about the first notification or the detailed information about the second notification is received, in response to the first operation, displaying a function interface of an application that sends the first notification or the second notification, where the function interface is related to the first notification or the second notification; or
if a second operation is received, in response to the second operation, stopping displaying the detailed information about the first notification and/or the detailed information about the second notification, and displaying the indication information of the at least two notifications.

In this way, when using another application or browsing a desktop, the user may pay attention to an event progress based on status bar capsule information. Optionally, if the user needs to learn of more detailed information, the user may also tap (where the tap is used as an example, and the operation may be actually defined as any simple operation that meets user's intuition) the status bar capsule, so that the electronic device expands a floating widget list for viewing or a convenient operation. This meets a requirement of the user for viewing notification details. In addition, a current task is not interrupted when a floating widget is expanded for displaying.

According to the first aspect or any one of the foregoing implementations of the first aspect, the method further includes: expanding and displaying a notification center in response to an operation performed by the user on the status bar, where the notification center includes the indication information of the at least two notifications or detailed information about the at least two notifications, and a display manner of the indication information of the at least two notifications or the detailed information about the at least two notifications includes tile display, stacked display, or 3D display.

According to the first aspect or any one of the foregoing implementations of the first aspect, the method further includes: The electronic device enters a screen-off state and displays a screen-off interface, where the screen-off interface includes the indication information of the at least two notifications or the detailed information about the at least two notifications, and the display manner of the indication information of the at least two notifications or the detailed information about the at least two notifications includes tile display, stacked display, or 3D display.

According to the first aspect or any one of the foregoing implementations of the first aspect, the method further includes: The electronic device enters a screen-locked state and displays a lock screen, where the lock screen includes the indication information of the at least two notifications or the detailed information about the at least two notifications, and the display manner of the indication information of the at least two notifications or the detailed information about the at least two notifications includes tile display, stacked display, or 3D display.

In this way, the electronic device properly displays notifications in a timely manner based on different display scenarios, to prevent the user from missing some high-timeliness notifications and improve a notification reminder effect.

In addition, in the different display scenarios, the electronic device adaptively adjusts a display style of a notification, so that the display and operation of the current task are not affected while it is ensured that the notification is displayed.

In addition, the electronic device can effectively and promptly display a notification generated by a third-party service, to ensure integrity and accuracy of the notification.

According to the first aspect or any one of the foregoing implementations of the first aspect, both the indication information of the first notification and the indication information of the second notification are in a capsule form, the two pieces of indication information in the capsule form are displayed in the stacked manner, and the stack includes horizontal stack or vertical stack.

In this way, different display forms of live notifications are adapted on different devices, to ensure optimal experience of adapting to a current device. For example, on a device with a narrow display area of a status bar, for example, a mobile phone, capsule notifications are vertically stacked to reduce an occupied display area on the status bar. For another example, on a device with a wide display area of a status bar, for example, a foldable screen/a tablet computer, capsule notifications are horizontally stacked to display richer content.

According to the first aspect or any one of the foregoing implementations of the first aspect, the indication information not only indicates the application that sends the first notification or the second notification, but also indicates the content of the first notification or the content of the second notification.

For example, the indication information includes information such as an icon of the application that sends the first notification or the second notification, partial content of the first notification or partial content of the second notification, and a color (for example, a capsule color, a widget color, or a text color) of the first notification or the second notification.

According to the first aspect or any one of the foregoing implementations of the first aspect, the method further includes: when the indication information of the first notification partially covers the indication information of the second notification, in response to an operation performed by the user on a first control in the indication information of the first notification, executing a first task by using a second application corresponding to the first notification; or when the indication information of the second notification partially covers the indication information of the first notification, in response to an operation performed by the user on a second control in the indication information of the second notification, executing a second task by using a third application corresponding to the second notification.

According to the first aspect or any one of the foregoing implementations of the first aspect, there is at least one first control or second control.

Optionally, a more precise keyboard and mouse operation or focus operation function is configured in devices such as a PC and a smart television. This allows the devices to support multi-hot zone button operations in the capsule form. For example, a plurality of operable controls are preset in the capsule notifications, and then the user may implement different functions by using the plurality of controls, thereby meeting more operation requirements of the user.

According to a second aspect, a notification display method is provided, and is applied to an electronic device. The method includes: displaying a first interface, where indication information of a first notification is displayed in a status bar of the first interface; generating indication information of a second notification; determining a display priority sequence of the indication information of the first notification and the indication information of the second notification according to a sorting rule; and displaying the indication information of the first notification and the indication information of the second notification in the status bar based on the display priority sequence.

According to the second aspect or any one of the foregoing implementations of the second aspect, the indication information of the second notification meets a second condition, and the second condition includes that the indication information of the second notification is indication information of a live notification type.

According to the second aspect, displaying the indication information of the first notification and the indication information of the second notification in the status bar based on the display priority sequence includes: displaying the indication information of the first notification and the indication information of the second notification in the status bar in a capsule display manner.

According to the second aspect or any one of the foregoing implementations of the second aspect, displaying the indication information of the first notification and the indication information of the second notification in the status bar based on the display priority sequence includes: if a display priority of the indication information of the second notification is higher than or equal to a display priority of the indication information of the first notification, preempting a display position of the indication information of the first notification, to expose and display the indication information of the second notification; or if a display priority of the indication information of the second notification is lower than or equal to a display priority of the indication information of the first notification, skipping displaying the indication information of the second notification, or displaying the indication information of the second notification in a stacked manner, so that the indication information of the first notification partially or completely covers the indication information of the second notification.

According to the second aspect or any one of the foregoing implementations of the second aspect, a quantity of display positions in the status bar is a first quantity, and a quantity of pieces of indication information of the first notification is greater than or equal to the first quantity.

In this way, when display space is insufficient, the electronic device may also preferentially display an important live notification in a manner of preempting a display position, to avoid invalidity of the live notification due to exceeding a timeliness requirement of the live notification.

According to the second aspect or any one of the foregoing implementations of the second aspect, when the quantity of pieces of indication information of the first notification is less than the first quantity, the method further includes: exposing and displaying the indication information of the first notification and the indication information of the second notification.

In this way, in a plurality of display scenarios, if display space of a to-be-displayed position is sufficient, the electronic device may adaptively display a generated live notification according to a preset sorting rule. This prevents the user from missing the live notification according to a proper display sequence, and ensures an important live notification to be preferentially displayed.

According to the second aspect or any one of the foregoing implementations of the second aspect, the method further includes: when skipping displaying the indication information of the second notification or displaying the indication information of the second notification in the stacked manner, obtaining refreshed content of the indication information of the second notification; and preempting, within preset duration, the display position of the indication information of the first notification, to expose and display the refreshed content of the indication information of the second notification.

In this way, the electronic device adjusts, based on a change status of a live notification, a display sequence of a plurality of displayed live notifications, to ensure display timeliness of the live notifications, and prevent the user from missing an important live notification.

According to the second aspect or any one of the foregoing implementations of the second aspect, the refreshed content is refreshed content that meets a first condition in a plurality of pieces of refreshed content of the indication information of the second notification, and the first condition includes that the refreshed content is refreshed content of a preset node, or the refreshed content is refreshed content of a preset type.

In this way, the electronic device adjusts, based on a change status of a live notification, a display sequence of a plurality of displayed live notifications, to ensure display timeliness of the live notifications, and prevent the user from missing an important live notification. It is convenient for the user to focus on the most important notification progress and not to miss important updated content from other notifications.

In addition, the overall solution takes into account an advantage of fixed sorting for easy user search and allows the user to obtain more comprehensive information through a temporary preemption mechanism to avoid missing important content.

According to the second aspect or any one of the foregoing implementations of the second aspect, the method further includes: detecting an operation performed by a user on indication information of a notification displayed in the status bar, and displaying a first widget corresponding to the indication information of the first notification and a second widget corresponding to the indication information of the second notification.

According to the second aspect or any one of the foregoing implementations of the second aspect, the method further includes: detecting an operation performed by a user on a first control in the indication information of the first notification, and executing a first task by using a second application corresponding to the first notification; or detecting an operation performed by a user on a second control in the indication information of the second notification, and executing a second task by using a third application corresponding to the second notification.

According to the second aspect or any one of the foregoing implementations of the second aspect, there is at least one first control or second control.

According to a third aspect, a notification display method is provided, and is applied to an electronic device. The method includes: displaying a screen-off interface, where the screen-off interface includes a function window; and displaying a first animation in the function window, where the first animation corresponds to a first notification.

According to the third aspect, a second animation is also displayed in the function window in a stacked manner, the second animation corresponds to a second notification, and the stacked manner includes that the first animation partially or completely covers the second animation, or the second animation partially or completely covers the first animation.

According to the third aspect or any one of the foregoing implementations of the third aspect, the first animation is a 2D animation or a 3D animation.

For example, a notification is a takeout notification, and the electronic device may display, in the function window, a takeout route map corresponding to the notification, so that a user can determine a moving position of a rider, estimate delivery time, and the like.

For another example, the electronic device is a VR/AR device. In this case, the electronic device may support information presentation of a 3D model. For example, a notification of a food delivery application displayed by the VR/AR device includes 3D model presentation, for example, a takeout small person model is riding an e-bike and is approaching.

In this way, a notification display manner of the 2D animation or the 3D animation is used to provide the user with more flexible and vivid notification display experience.

According to the third aspect or any one of the foregoing implementations of the third aspect, the method further includes: determining, according to a sorting rule, that the stacked manner of the first animation and the second animation is that the first animation partially or completely covers the second animation, or the first animation partially or completely covers the first animation.

According to the third aspect or any one of the foregoing implementations of the third aspect, the sorting rule includes one or more of the following rules: creation time of a notification, update time of a notification, an importance degree of a notification, a priority of a notification, historical data of a notification viewed by the user, or a notification sequence manually set by the user.

According to the third aspect or any one of the foregoing implementations of the third aspect, when the sorting rule is the update time of the notification, if update time of the first notification is later than update time of the second notification, it is determined that the stacked manner is that the first animation partially or completely covers the second animation; or if update time of the second notification is later than update time of the first notification, it is determined that the stacked manner is that the second animation partially or completely covers the first animation.

Alternatively, when the sorting rule is the importance degree of the notification, if an importance degree of the first notification is greater than or equal to an importance degree of the second notification, it is determined that the stacked manner is that the first animation covers or completely covers the second animation; or if an importance degree of the first notification is less than or equal to an importance degree of the second notification, it is determined that the stacked manner is that the second animation partially or completely covers the first animation.

Alternatively, when the sorting rule is the priority of the notification, if a priority of the first notification is higher than or equal to a priority of the second notification, it is determined that the stacked manner is that the first animation partially or completely covers the second animation; or if a priority of the first notification is lower than or equal to a priority of the second notification, it is determined that the stacked manner is that the second animation partially or completely covers the first animation.

According to the third aspect or any one of the foregoing implementations of the third aspect, when the first animation partially covers the second animation, it is detected that content of the second notification changes, and then the stacked manner is updated, so that the second animation partially or completely covers the first animation; or when the second animation partially covers the first animation, it is detected that content of the first notification changes, and then the stacked manner is updated, so that the first animation partially or completely covers the second animation.

According to the third aspect or any one of the foregoing implementations of the third aspect, the stacked manner is updated for an (N+1)^{th} time within preset duration after the stacked manner is updated for an N^{th} time, so that the stacked manner returns to a state before the stacked manner is updated for the N^{th} time, where N is a positive integer.

According to the third aspect or any one of the foregoing implementations of the third aspect, the method further includes: when it is detected that a first preset condition corresponding to the first notification is met or when it is detected that a second preset condition corresponding to the second notification is met, displaying the first animation or the second animation in the function window of the screen-off interface.

According to the third aspect or any one of the foregoing implementations of the third aspect, the first preset condition or the second preset condition includes that predetermined time arrives, or that the content of the first notification or the content of the second notification is substantially updated.

According to a fourth aspect, an electronic device is provided. The electronic device includes a processor, a memory, and a display. The memory and the display are coupled to the processor, the memory is configured to store computer program code, the computer program code includes computer instructions, and when the processor reads the computer instructions from the memory, the electronic device is enabled to perform: displaying a first interface, where the first interface includes a status bar on a top; and displaying indication information of at least two notifications in the status bar in a stacked manner, where the indication information of the at least two notifications includes indication information of a first notification and indication information of a second notification, and the stacked manner includes that the indication information of the first notification partially or completely covers the indication information of the second notification, or the indication information of the second notification partially or completely covers the indication information of the first notification.

According to the fourth aspect, when the processor reads the computer instructions from the memory, the electronic device is further enabled to perform: determining, according to a sorting rule, that the stacked manner of the indication information of the at least two notifications is that the indication information of the first notification partially or completely covers the indication information of the second notification, or the indication information of the second notification partially or completely covers the indication information of the first notification.

According to the fourth aspect or any one of the foregoing implementations of the fourth aspect, the sorting rule includes one or more of the following rules: creation time of a notification, update time of a notification, an importance degree of a notification, a priority of a notification, historical data of a notification viewed by a user, or a notification sequence manually set by a user.

According to the fourth aspect or any one of the foregoing implementations of the fourth aspect, when the sorting rule is the update time of the notification, if update time of the first notification is later than update time of the second notification, it is determined that the stacked manner is that the indication information of the first notification partially or completely covers the indication information of the second notification; or if update time of the second notification is later than update time of the first notification, it is determined that the stacked manner is that the indication information of the second notification partially or completely covers the indication information of the first notification.

Alternatively, when the sorting rule is the importance degree of the notification, if an importance degree of the first notification is greater than or equal to an importance degree of the second notification, it is determined that the stacked manner is that the indication information of the first notification partially or completely covers the indication information of the second notification; or
if an importance degree of the first notification is less than or equal to an importance degree of the second notification, it is determined that the stacked manner is that the indication information of the second notification partially or completely covers the indication information of the first notification.

Alternatively, when the sorting rule is the priority of the notification, if a priority of the first notification is higher than or equal to a priority of the second notification, it is determined that the stacked manner is that the indication information of the first notification partially or completely covers the indication information of the second notification; or if a priority of the first notification is lower than or equal to a priority of the second notification, it is determined that the stacked manner is that the indication information of the second notification partially or completely covers the indication information of the first notification.

According to the fourth aspect or any one of the foregoing implementations of the fourth aspect, when the indication information of the first notification partially covers the indication information of the second notification, it is detected that content of the second notification changes, and then the stacked manner is updated, so that the indication information of the second notification partially or completely covers the indication information of the first notification; or when the indication information of the second notification partially covers the indication information of the first notification, it is detected that content of the first notification changes, and then the stacked manner is updated, so that the indication information of the first notification partially or completely covers the indication information of the second notification.

According to the fourth aspect or any one of the foregoing implementations of the fourth aspect, the stacked manner is updated for an (N+1)^{th} time within preset duration after the stacked manner is updated for an N^{th} time, so that the stacked manner returns to a state before the stacked manner is updated for the N^{th} time, where N is a positive integer.

According to the fourth aspect or any one of the foregoing implementations of the fourth aspect, displaying the indication information of the at least two notifications in the status bar on the top in the stacked manner includes: when it is detected that a first preset condition corresponding to the first notification is met or when it is detected that a second preset condition corresponding to the second notification is met, displaying the indication information of the first notification or the indication information of the second notification in the status bar on the top.

According to the fourth aspect or any one of the foregoing implementations of the fourth aspect, the first preset condition or the second preset condition includes that predetermined time arrives, or that the content of the first notification or the content of the second notification is substantially updated.

According to the fourth aspect or any one of the foregoing implementations of the fourth aspect, when the processor reads the computer instructions from the memory, the electronic device is further enabled to perform: displaying an interface of a first application; and in response to an operation performed by the user on the indication information of the at least two notifications displayed in the stacked manner, displaying detailed information about the first notification and/or detailed information about the second notification in the interface of the first application in a floating manner.

According to the fourth aspect or any one of the foregoing implementations of the fourth aspect, the detailed information is carried in a widget form.

According to the fourth aspect or any one of the foregoing implementations of the fourth aspect, when the processor reads the computer instructions from the memory, the electronic device is further enabled to perform: stopping displaying the indication information of the at least two notifications in the status bar on the top; and if a first operation for the detailed information about the first notification or the detailed information about the second notification is received, in response to the first operation, displaying a function interface of an application that sends the first notification or the second notification, where the function interface is related to the first notification or the second notification; or
if a second operation is received, in response to the second operation, stopping displaying the detailed information about the first notification and/or the detailed information about the second notification, and displaying the indication information of the at least two notifications.

According to the fourth aspect or any one of the foregoing implementations of the fourth aspect, when the processor reads the computer instructions from the memory, the electronic device is further enabled to perform: expanding and displaying a notification center in response to an operation performed by the user on the status bar, where the notification center includes the indication information of the at least two notifications or detailed information about the at least two notifications, and a display manner of the indication information of the at least two notifications or the detailed information about the at least two notifications includes tile display, stacked display, or 3D display.

According to the fourth aspect or any one of the foregoing implementations of the fourth aspect, when the processor reads the computer instructions from the memory, the electronic device is further enabled to perform: entering a screen-off state and displaying a screen-off interface, where the screen-off interface includes the indication information of the at least two notifications or the detailed information about the at least two notifications, and the display manner of the indication information of the at least two notifications or the detailed information about the at least two notifications includes tile display, stacked display, or 3D display.

According to the fourth aspect or any one of the foregoing implementations of the fourth aspect, when the processor reads the computer instructions from the memory, the electronic device is further enabled to perform: The electronic device enters a screen-locked state and displays a lock screen, where the lock screen includes the indication information of the at least two notifications or the detailed information about the at least two notifications, and the display manner of the indication information of the at least two notifications or the detailed information about the at least two notifications includes tile display, stacked display, or 3D display.

According to the fourth aspect or any one of the foregoing implementations of the fourth aspect, both the indication information of the first notification and the indication information of the second notification are in a capsule form, the two pieces of indication information in the capsule form are displayed in the stacked manner, and the stack includes horizontal stack or vertical stack.

According to the fourth aspect or any one of the foregoing implementations of the fourth aspect, the indication information not only indicates the application that sends the first notification or the second notification, but also indicates the content of the first notification or the content of the second notification.

According to the fourth aspect or any one of the foregoing implementations of the fourth aspect, when the processor reads the computer instructions from the memory, the electronic device is further enabled to perform: when the indication information of the first notification partially covers the indication information of the second notification, in response to an operation performed by the user on a first control in the indication information of the first notification, executing a first task by using a second application corresponding to the first notification; or when the indication information of the second notification partially covers the indication information of the first notification, in response to an operation performed by the user on a second control in the indication information of the second notification, executing a second task by using a third application corresponding to the second notification.

According to the fourth aspect or any one of the foregoing implementations of the fourth aspect, there is at least one first control or second control.

According to a fifth aspect, an electronic device is provided. The electronic device includes a processor, a memory, and a display. The memory and the display are coupled to the processor, the memory is configured to store computer program code, the computer program code includes computer instructions, and when the processor reads the computer instructions from the memory, the electronic device is enabled to perform: displaying a first interface, where indication information of a first notification is displayed in a status bar of the first interface; generating indication information of a second notification; determining a display priority sequence of the indication information of the first notification and the indication information of the second notification according to a sorting rule; and displaying the indication information of the first notification and the indication information of the second notification in the status bar based on the display priority sequence.

According to the fifth aspect or any one of the foregoing implementations of the fifth aspect, the indication information of the second notification meets a second condition, and the second condition includes that the indication information of the second notification is indication information of a live notification type.

According to the fifth aspect, displaying the indication information of the first notification and the indication information of the second notification in the status bar based on the display priority sequence includes: displaying the indication information of the first notification and the indication information of the second notification in the status bar in a capsule display manner.

According to the fifth aspect or any one of the foregoing implementations of the fifth aspect, displaying the indication information of the first notification and the indication information of the second notification in the status bar based on the display priority sequence includes: if a display priority of the indication information of the second notification is higher than or equal to a display priority of the indication information of the first notification, preempting a display position of the indication information of the first notification, to expose and display the indication information of the second notification; or if a display priority of the indication information of the second notification is lower than or equal to a display priority of the indication information of the first notification, skipping displaying the indication information of the second notification, or displaying the indication information of the second notification in a stacked manner, so that the indication information of the first notification partially or completely covers the indication information of the second notification.

According to the fifth aspect or any one of the foregoing implementations of the fifth aspect, a quantity of display positions in the status bar is a first quantity, and a quantity of pieces of indication information of the first notification is greater than or equal to the first quantity.

According to the fifth aspect or any one of the foregoing implementations of the fifth aspect, when the quantity of pieces of indication information of the first notification is less than the first quantity, when the processor reads the computer instructions from the memory, the electronic device is further enabled to perform: exposing and displaying the indication information of the first notification and the indication information of the second notification.

According to the fifth aspect or any one of the foregoing implementations of the fifth aspect, when the processor reads the computer instructions from the memory, the electronic device is further enabled to perform: when skipping displaying the indication information of the second notification or displaying the indication information of the second notification in the stacked manner, obtaining refreshed content of the indication information of the second notification; and preempting, within preset duration, the display position of the indication information of the first notification, to expose and display the refreshed content of the indication information of the second notification.

According to the fifth aspect or any one of the foregoing implementations of the fifth aspect, the refreshed content is refreshed content that meets a first condition in a plurality of pieces of refreshed content of the indication information of the second notification, and the first condition includes that the refreshed content is refreshed content of a preset node, or the refreshed content is refreshed content of a preset type.

According to the fifth aspect or any one of the foregoing implementations of the fifth aspect, when the processor reads the computer instructions from the memory, the electronic device is further enabled to perform: detecting an operation performed by a user on indication information of a notification displayed in the status bar, and displaying a first widget corresponding to the indication information of the first notification and a second widget corresponding to the indication information of the second notification.

According to the fifth aspect or any one of the foregoing implementations of the fifth aspect, when the processor reads the computer instructions from the memory, the electronic device is further enabled to perform: detecting an operation performed by a user on a first control in the indication information of the first notification, and executing a first task by using a second application corresponding to the first notification; or detecting an operation performed by a user on a second control in the indication information of the second notification, and executing a second task by using a third application corresponding to the second notification.

According to the fifth aspect or any one of the foregoing implementations of the fifth aspect, there is at least one first control or second control.

According to a sixth aspect, an electronic device is provided. The electronic device includes a processor, a memory, and a display. The memory and the display are coupled to the processor, the memory is configured to store computer program code, the computer program code includes computer instructions, and when the processor reads the computer instructions from the memory, the electronic device is enabled to perform: displaying a screen-off interface, where the screen-off interface includes a function window; and displaying a first animation in the function window, where the first animation corresponds to a first notification.

According to the sixth aspect, a second animation is also displayed in the function window in a stacked manner, the second animation corresponds to a second notification, and the stacked manner includes that the first animation partially or completely covers the second animation, or the second animation partially or completely covers the first animation.

According to the sixth aspect or any one of the foregoing implementations of the sixth aspect, the first animation is a 2D animation or a 3D animation.

According to the sixth aspect or any one of the foregoing implementations of the sixth aspect, when the processor reads the computer instructions from the memory, the electronic device is further enabled to perform: determining, according to a sorting rule, that the stacked manner of the first animation and the second animation is that the first animation partially or completely covers the second animation, or the first animation partially or completely covers the first animation.

According to the sixth aspect or any one of the foregoing implementations of the sixth aspect, the sorting rule includes one or more of the following rules: creation time of a notification, update time of a notification, an importance degree of a notification, a priority of a notification, historical data of a notification viewed by a user, or a notification sequence manually set by a user.

According to the sixth aspect or any one of the foregoing implementations of the sixth aspect, when the sorting rule is the update time of the notification, if update time of the first notification is later than update time of the second notification, it is determined that the stacked manner is that the first animation partially or completely covers the second animation; or if update time of the second notification is later than update time of the first notification, it is determined that the stacked manner is that the second animation partially or completely covers the first animation.

Alternatively, when the sorting rule is the importance degree of the notification, if an importance degree of the first notification is greater than or equal to an importance degree of the second notification, it is determined that the stacked manner is that the first animation covers or completely covers the second animation; or if an importance degree of the first notification is less than or equal to an importance degree of the second notification, it is determined that the stacked manner is that the second animation partially or completely covers the first animation.

Alternatively, when the sorting rule is the priority of the notification, if a priority of the first notification is higher than or equal to a priority of the second notification, it is determined that the stacked manner is that the first animation partially or completely covers the second animation; or if a priority of the first notification is lower than or equal to a priority of the second notification, it is determined that the stacked manner is that the second animation partially or completely covers the first animation.

According to the sixth aspect or any one of the foregoing implementations of the sixth aspect, when the first animation partially covers the second animation, it is detected that content of the second notification changes, and then the stacked manner is updated, so that the second animation partially or completely covers the first animation; or when the second animation partially covers the first animation, it is detected that content of the first notification changes, and then the stacked manner is updated, so that the first animation partially or completely covers the second animation.

According to the sixth aspect or any one of the foregoing implementations of the sixth aspect, the stacked manner is updated for an (N+1)^{th} time within preset duration after the stacked manner is updated for an N^{th} time, so that the stacked manner returns to a state before the stacked manner is updated for the N^{th} time, where N is a positive integer.

According to the sixth aspect or any one of the foregoing implementations of the sixth aspect, when the processor reads the computer instructions from the memory, the electronic device is further enabled to perform: when it is detected that a first preset condition corresponding to the first notification is met or when it is detected that a second preset condition corresponding to the second notification is met, displaying the first animation or the second animation in the function window of the screen-off interface.

According to the sixth aspect or any one of the foregoing implementations of the sixth aspect, the first preset condition or the second preset condition includes that predetermined time arrives, or that the content of the first notification or the content of the second notification is substantially updated.

According to a seventh aspect, an electronic device is provided. The electronic device has a function of implementing the notification display method according to the first aspect and any one of the possible implementations of the first aspect; or the electronic device has a function of implementing the notification display method according to the second aspect and any one of the possible implementations of the second aspect; or the electronic device has a function of implementing the notification display method according to the third aspect and any one of the possible implementations of the third aspect. The function may be implemented by hardware, or may be implemented by hardware executing corresponding software. The hardware or the software includes one or more modules corresponding to the function.

According to an eighth aspect, a computer-readable storage medium is provided. The computer-readable storage medium stores a computer program (which may also be referred to as instructions or code). When the computer program is executed by an electronic device, the electronic device is enabled to perform the method according to the first aspect or any one of the implementations of the first aspect, or the electronic device is enabled to perform the method according to the second aspect or any one of the implementations of the second aspect, or the electronic device is enabled to perform the method according to the third aspect or any one of the implementations of the third aspect.

According to a ninth aspect, a computer program product is provided. When the computer program product runs on an electronic device, the electronic device is enabled to perform the method according to the first aspect or any one of the implementations of the first aspect, or the electronic device is enabled to perform the method according to the second aspect or any one of the implementations of the second aspect, or the electronic device is enabled to perform the method according to the third aspect or any one of the implementations of the third aspect.

According to a tenth aspect, a circuit system is provided. The circuit system includes a processing circuit, and the processing circuit is configured to perform the method according to the first aspect or any one of the implementations of the first aspect, or the processing circuit is configured to perform the method according to the second aspect or any one of the implementations of the second aspect, or the processing circuit is configured to perform the method according to the third aspect or any one of the implementations of the third aspect.

According to an eleventh aspect, a chip system is provided, including at least one processor and at least one interface circuit. The at least one interface circuit is configured to perform a transceiver function, and send instructions to the at least one processor. When the at least one processor executes the instructions, the at least one processor performs the method according to the first aspect or any one of the implementations of the first aspect, or the at least one processor performs the method according to the second aspect or any one of the implementations of the second aspect, or the at least one processor performs the method according to the third aspect or any one of the implementations of the third aspect.

For technical effects of the foregoing aspects, refer to each other. Details are not described herein again.

### BRIEF DESCRIPTION OF DRAWINGS

FIG. 1 is a diagram of forms of an electronic device according to an embodiment of this application;
FIG. 2 is a diagram of a hardware structure of an electronic device according to an embodiment of this application;
FIG. 3 is a schematic flowchart 1 of a notification display method according to an embodiment of this application;
FIG. 4(a) to FIG. 4(d) are a diagram 1 of notification display interfaces in different display scenarios according to an embodiment of this application;
FIG. 5 is a diagram 2 of notification display interfaces in different display scenarios according to an embodiment of this application;
FIG. 6 is a diagram 3 of notification display interfaces in different display scenarios according to an embodiment of this application;
FIG. 7 is a schematic flowchart 2 of a notification display method according to an embodiment of this application;
FIG. 8(a) to FIG. 8(e) are a diagram 1 of notification refreshed content display interfaces according to an embodiment of this application;
FIG. 9 is a diagram 2 of notification refreshed content display interfaces according to an embodiment of this application;
FIG. 10 is a diagram 1 of an interface of notification cancel according to an embodiment of this application;
FIG. 11 is a diagram 2 of an interface of notification cancel according to an embodiment of this application;
FIG. 12 is a schematic flowchart 3 of a notification display method according to an embodiment of this application;
FIG. 13(a) to FIG. 13(c) are a diagram 1 of notification details display interfaces according to an embodiment of this application;
FIG. 14(a) to FIG. 14(c) are a diagram 2 of notification details display interfaces according to an embodiment of this application;
FIG. 15(a) to FIG. 15(c) are a diagram 3 of notification details display interfaces according to an embodiment of this application;
FIG. 16 is a schematic flowchart 4 of a notification display method according to an embodiment of this application;
FIG. 17(a) to FIG. 17(c) are a diagram 1 of interfaces in which a notification preempts a display position according to an embodiment of this application;
FIG. 18(a) to FIG. 18(c) are a diagram 2 of interfaces in which a notification preempts a display position according to an embodiment of this application;
FIG. 19(a) to FIG. 19(c) are a diagram 3 of interfaces in which a notification preempts a display position according to an embodiment of this application;
FIG. 20 is a diagram 4 of interfaces in which a notification preempts a display position according to an embodiment of this application;
FIG. 21 is a diagram 5 of interfaces in which a notification preempts a display position according to an embodiment of this application;
FIG. 22(a) to FIG. 22(c) are a diagram of interfaces in which stacked notifications are expanded and displayed according to an embodiment of this application;
FIG. 23 is a schematic flowchart 5 of a notification display method according to an embodiment of this application;
FIG. 24(a) to FIG. 24(c) are a diagram of interfaces in which a notification temporarily preempts a display position according to an embodiment of this application;
FIG. 25 is a schematic flowchart 6 of a notification display method according to an embodiment of this application;
FIG. 26 is a diagram 1 of notification display interfaces of a special-form device according to an embodiment of this application;
FIG. 27 is a diagram 2 of notification display interfaces of a special-form device according to an embodiment of this application;
FIG. 28 is a diagram 3 of notification display interfaces of a special-form device according to an embodiment of this application;
FIG. 29 is a schematic flowchart 7 of a notification display method according to an embodiment of this application;
FIG. 30 is a diagram of an interface in which a notification is displayed in a status bar according to an embodiment of this application; and
FIG. 31 is a diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design solution described as an "example" or "for example" in embodiments of this application should not be construed as being more preferred or more advantageous than another embodiment or design solution. Exactly, use of the term "example", "for example", or the like is intended to present a related concept in a specific manner.

In some embodiments, an electronic device (for example, a mobile phone or a tablet computer) may display, in a plurality of manners, notifications generated by a service side. The service for generating the notifications is, for example, an application, a meta service, or an applet. For example, the electronic device prompts, in the plurality of manners such as a banner notification, a lock screen notification, and a desktop corner icon, a user with the notifications generated by the application, and the user may view these notifications.

Optionally, based on timeliness, the notifications may be divided into a live notification and a non-live notification. The live notification indicates a notification that has a high timeliness requirement, for example, an incoming call notification or a food delivery progress change notification. The non-live notification indicates a notification that has a low timeliness requirement, for example, an application update notification or a content recommendation. A division rule of the live notification and the non-live notification may be preset on the application. After the application generates a notification, the application may determine that the current notification is a live notification or a non-live notification.

In some examples, a live notification needs to make the user pay attention to the notification within a specific time period, so that accurate and valuable information can be transferred. After a validity period expires, the live notification becomes a spam message. For example, the user determines a progress of a current order based on the food delivery progress change notification, where the delivery progress includes, for example, that the merchant has accepted the order, the rider has accepted the order, the rider is on the way to the store, the rider is delivering the food, and the food has been delivered. In this case, if the user does not promptly pay attention to a notification that is displayed by the electronic device and that indicates that the merchant has accepted the order, but pays attention to the notification only in a subsequent stage of the delivery progress, the notification becomes an invalid spam message since a moment that the user pays attention to.

In addition, as a quantity of applications installed on the electronic device increases, and a quantity of notifications generated by different applications increases, it is also more difficult for the user to pay attention to a live notification in a timely manner.

In addition, after some notifications are invalid, the electronic device still displays these invalid notifications, and display of these invalid information also interferes with the user's attention to another valid notification.

In this case, currently, a plurality of vendors configure a preset function in an electronic device, so that the electronic device highlights a live notification in a preset manner, or highlights a notification that the electronic device considers that the user needs to pay attention to in a timely manner.

For example, after receiving the live notification, the electronic device displays the live notification in a pop-up window manner, to remind the user to pay attention to the live notification. A window display position is generally located near a camera hole.

However, this current notification display method strongly depends on a hardware form, and is not universally applicable. In addition, only brief content of live notifications generated by a limited quantity of preconfigured real-time tasks can be displayed.

For another example, a plurality of notification display templates are preconfigured in some electronic devices. After receiving an important notification, the electronic device refines and simplifies notification content based on the display template, and then displays processed notification content, so that the user quickly pays attention to the important notification received by the electronic device.

However, this current notification display method strongly depends on a processing capability of the electronic device, thereby increasing a possibility that a notification is inaccurate. In addition, the electronic device displays the processed notification based on a preset display occasion, and consequently, a timeliness requirement of the live notification cannot be met, and the user cannot perceive the notification in a timely manner.

For another example, some electronic devices preconfigure a window on a desktop. After subsequently receiving an important notification of a preset application, the electronic device may display the received notification via the preset window, so that the user can perceive the notification in a timely manner.

However, because the preset window is displayed in a floating manner for a long time, important information displayed on the desktop is blocked, and a user operation is affected. In addition, the current preset window supports display of notification messages of only some preset applications, and consequently, use scenarios are limited.

Therefore, according to a notification display method provided in embodiments of this application, after receiving a notification of a preset type, the electronic device performs reminding by using a capsule or a widget that can be adapted to a plurality of display scenarios. In addition, a plurality of capsules or widgets can be displayed to meet requirements of a plurality of live notifications.

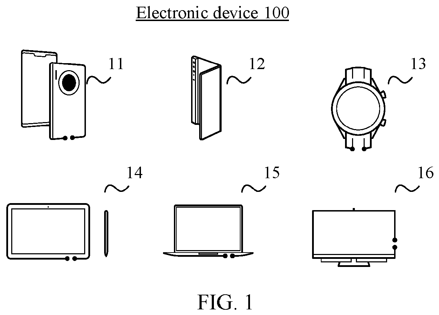

Optionally, the notification display method provided in embodiments of this application may be applied to an electronic device 100. As shown in FIG. 1, the electronic device 100 may be specifically a terminal device that has a display function, for example, a mobile phone 11, a foldable mobile phone 12, a wearable device (like a smartwatch or a smart band) 13, a tablet computer 14, a notebook computer 15, a smart screen 16, a scroll screen mobile phone, a vehiclemounted terminal, a computing machine, a computer, a personal computer (personal computer, PC), an ultra-mobile personal computer (ultra-mobile personal computer, UMPC), a netbook, a personal digital assistant (personal digital assistant, PDA), a virtual reality (virtual reality, VR) device/augmented reality (augmented reality, AR) device, or an artificial intelligence (artificial intelligence, AI) device. An operating system installed on the electronic device 100 includes but is not limited to iOS^{®}, Android^{®}, HarmonyOS^{®}, Windows^{®}, Linux^{®}, or another operating system. A specific type of the electronic device 100 and the operating system installed on the electronic device 100 are not limited in this application.

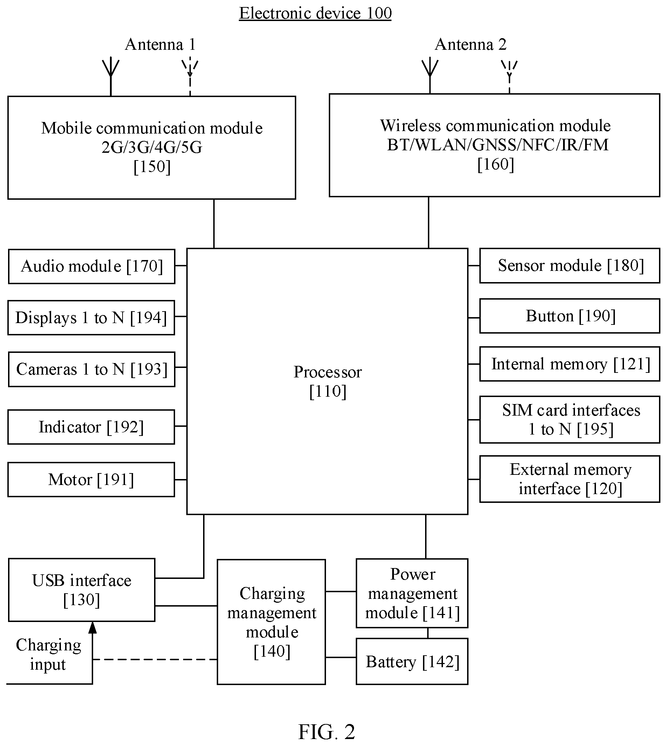

For example, as shown in FIG. 2, the electronic device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like.

It may be understood that the structures shown in embodiments of this application do not constitute specific limitations on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The storage may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the electronic device 100.

The MIPI interface may be configured to connect the processor 110 to a peripheral component such as the display 194 or the camera 193. The MIPI interface includes a camera serial interface (camera serial interface, CSI), a display serial interface (display serial interface, DSI), or the like. In some embodiments, the processor 110 communicates with the camera 193 via the CSI, to implement a photographing function of the electronic device 100. The processor 110 communicates with the display 194 via the DSI interface, to implement a display function of the electronic device 100.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to exchange data between the electronic device 100 and a peripheral device, or may be configured to connect to a headset for playing audio through the headset. The interface may be further configured to connect to another first electronic device, for example, an AR device.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to a first electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component with at least some modules of the processor 110.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the electronic device 100 may include one or N displays 194, where N is a positive integer greater than 1.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to a DSP for processing. The DSP converts the digital image signal into an image signal in a standard format such as RGB or YUV. In some embodiments, the electronic device 100 may include one or N cameras 193, where N is a positive integer greater than 1.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The internal memory 121 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs instructions stored in the internal memory 121 and/or instructions stored in the memory disposed in the processor, to perform various function applications and data processing of the electronic device 100.

The audio module 170 is configured to convert digital audio information into an analog audio signal output, and is also configured to convert an analog audio input into a digital audio signal. The audio module 170 may be further configured to code and decode audio signals. In some embodiments, the audio module 170 may be disposed in the processor 110, or some functional modules in the audio module 170 are disposed in the processor 110. The electronic device 100 may perform music playing, recording, or the like through the audio module 170. The audio module 170 may include a speaker, a receiver, a microphone, a headset jack, an application processor, and the like to implement audio functions.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch device". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor, to determine a touch event type. A visual output related to the touch operation may be provided through the display 194. In some other embodiments, the touch sensor may alternatively be disposed on a surface of the electronic device 100, and is at a position different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback.

The indicator 192 may be an indicator light, may be configured to indicate a charging status and a power change, and may be configured to indicate a message, a missed call, a notification, and the like.

The SIM card interface 195 is configured to connect to a SIM card. The device 100 may support one or N SIM card interfaces, where N is a positive integer greater than 1.

In some embodiments, the electronic device supports displaying a notification in a plurality of display scenarios such as a screen-off interface, a lock screen, a notification center, a status bar, and a floating widget. A system may preconfigure containers used to display a notification in different display scenarios, and the containers indicate a notification display style. For example, the electronic device displays, in the status bar by using a capsule display style, a display notification sent by a service side. Screen-off interface display includes full-screen always on display (always on display, AOD), partial AOD, and functional AOD.

Optionally, after generating the notification, the service side in the electronic device may invoke a corresponding system interface based on a current display scenario, and write notification content into a corresponding preset container through the system interface. In this way, the system can obtain and display the notification.

Optionally, a service that generates a notification in the electronic device is, for example, an application, a meta service, or an applet. A system for managing notification display in the electronic device is, for example, an operating system installed on the electronic device.

In some embodiments, the notification generated by the service side may be a live notification (which may also be described as a live-type notification, a live-class notification, or the like) or a non-live notification (which may also be described as a non-live-type notification, a non-live-class notification, or the like) based on timeliness. The live notification indicates a notification that has a high timeliness requirement, for example, an incoming call notification or a food delivery progress change notification. The non-live notification indicates a notification that has a low timeliness requirement, for example, an application update notification or a content recommendation. The electronic device may determine, according to a preset rule, that a current notification is the live notification or the non-live notification.

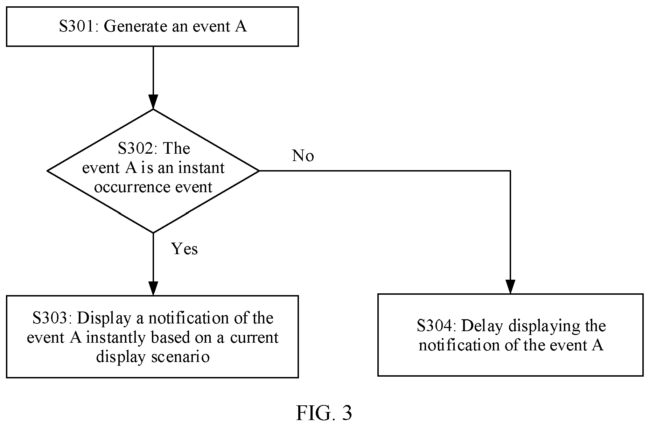

For example, FIG. 3 is a schematic flowchart of a notification display method according to an embodiment of this application. As shown in FIG. 3, the method includes the following steps.

S301: An electronic device generates an event A.

In some embodiments, the electronic device generates the event A in response to a user operation, and determines that a user needs to be notified of the event A.

For example, the electronic device detects an operation performed by the user in a food delivery application, and generates an order 1. In this case, the electronic device generates the event A indicating the order 1. In a process of changing a status of the event A, the electronic device generates a corresponding notification, to notify the user of a progress change status of the order 1.

Optionally, the event A is an event for generating a live notification. Optionally, the electronic device may generate different types of live notifications, for example, a system task-type live notification, a third-party service-type live notification, and a predetermined live notification. The electronic device may display the live notification at a proper time based on different live notification types.

S302: The electronic device determines whether the event A is an instant occurrence event. If yes, step S303 is performed. If no, step S304 is performed.

S303: The electronic device displays the event A instantly based on a current display scenario.

S304: The electronic device delays displaying the event A.

In some embodiments, after the electronic device generates the event A, to prevent the user from being interfered by missing the notification of the event A or excessive reminding, the electronic device needs to analyze an event type of the event A, and determine a live notification type of the event A, to display the notification of the event A at the proper time.

Optionally, the event type includes an instant occurrence event and a predetermined occurrence event.

For example, the event A is the instant occurrence event, and the electronic device determines that the live notification of the event A needs to be displayed immediately, that is, step S303 is performed. For example, the event A is a food delivery event. The electronic device needs to display a corresponding live notification in real time based on a progress change of the food delivery, for example, the merchant has accepted the order, the rider has accepted the order, the rider is on the way to the store, the rider is delivering the food, and the food has been delivered, to avoid that the user misses the live notification, and the notification becomes an invalid message due to a timeout.

For another example, the event A is the predetermined occurrence event, and the electronic device may display the live notification of the event A based on actual occurrence time of the event A, that is, step S304 is performed. For example, the event A is a high-speed railway ticket booking event. If the high-speed railway ticket booking event occurrence time is five days before actual departure time, it can be learned that the electronic device may determine, based on the actual departure time, that the live notification of the event A is a predetermined live notification. In this case, the electronic device displays the live notification of the event A at delayed time according to a preset rule. For example, if a preset rule is that a live notification corresponding to ticket information is displayed three hours before actual departure, the electronic device determines, based on actual departure time T1 and advance duration T2, that time for displaying the live notification is (T1-T2).

In some embodiments, when determining that the notification needs to be displayed, the electronic device may determine, based on a current display scenario, information such as a display position, a display style, and displayed content of the notification in different display scenarios.

Optionally, the display scenarios include a full-screen AOD, a partial AOD, a functional AOD, a lock screen, a notification center, a status bar, a floating widget, desktop display, and the like. The display style includes capsule display, widget display, visual image display, and the like. Optionally, the display style may further include a display color, for example, a capsule color, a widget color, or a text color. The display color may be the same as or similar to a theme color of a service of a notification source. For example, if the notification source is an application, and a theme color of the application is blue, a corresponding capsule notification color may also be blue, so that the user can distinguish between different notification sources.

Optionally, in different display scenarios, priorities of different display positions are different. The electronic device may display the live notification at a position with the corresponding priority based on a priority of the live notification. For example, the electronic device preferentially displays a recently received live notification at a display position with a higher priority according to a sequence of receiving live notifications. For another example, for some live notifications that have a higher requirement on timeliness, the electronic device preferentially displays these live notifications at a position with a higher priority. For example, a timeliness requirement of a call notification is higher than that of another live notification. A rule for determining a priority sequence of live notifications may be preset in the electronic device.

For example, in the display scenarios such as the full-screen AOD, the lock screen, the notification center, and the floating widget, the electronic device displays notification content by using the display style of the widget display. Optionally, displayed content of a widget includes, for example, a notification source icon, primary and secondary text, visual detailed information, and an operable control. The notification source icon is, for example, an icon of the service that generates the notification, for example, an application icon. The primary and secondary text is, for example, text content of the notification. The visual detailed information is, for example, detailed content of the notification, for example, text or an image. The operable control is, for example, a control that can be used by the user to perform an operation on a notification. For example, the notification is a timer notification, and a pause/continue control is displayed on a corresponding widget. In response to an operation performed by the user on the pause/continue control, the electronic device may pause timing or continue timing without starting a timer application.

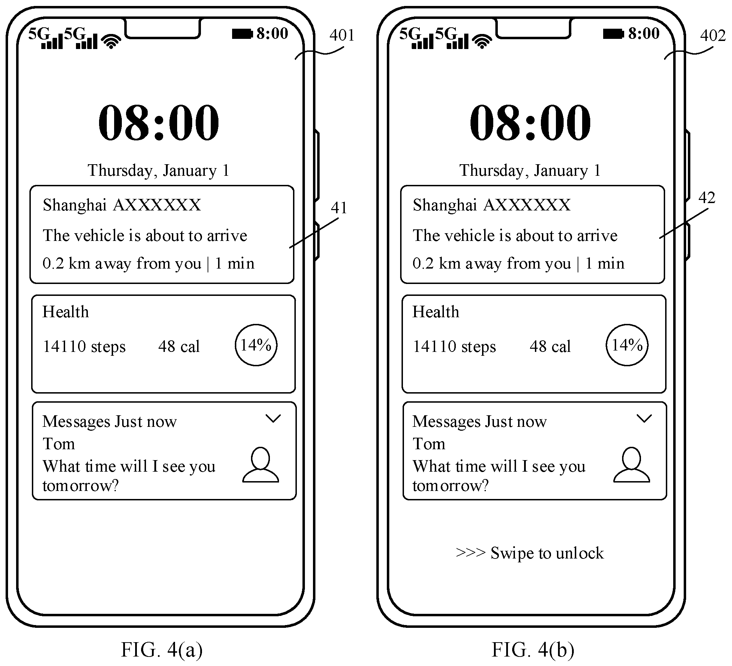

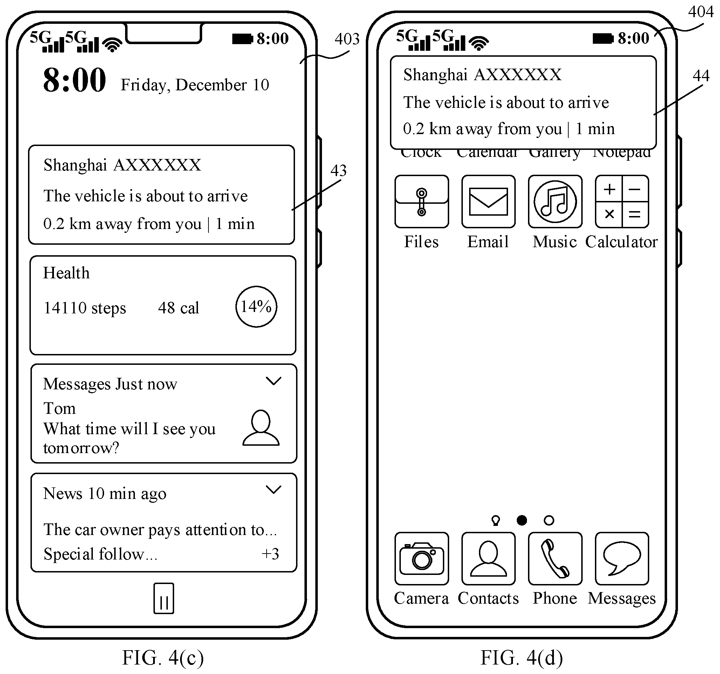

For example, as shown in FIG. 4(a), in a process of displaying a full-screen AOD interface 401, the electronic device receives an event A, and determines that the event A is an instant occurrence event, and a live notification corresponding to the event A needs to be displayed immediately. In this case, the electronic device may display, by using a widget, a live notification 41 corresponding to the event A at a position with a highest priority on the full-screen AOD interface 401 based on a current full-screen AOD display scenario. Alternatively, as shown in FIG. 4(b), in a process of displaying a lock screen 402, the electronic device receives an event A, and determines that the event A is an instant occurrence event, and a live notification corresponding to the event A needs to be displayed immediately. In this case, the electronic device may display, by using a widget, a live notification 42 corresponding to the event A at a position with a highest priority on the lock screen 402 based on a current lock screen display scenario. Alternatively, as shown in FIG. 4(c), in a process of displaying a notification center interface 403, the electronic device receives an event A, and determines that the event A is an instant occurrence event, and a live notification corresponding to the event A needs to be displayed immediately. In this case, the electronic device may display, by using a widget, a live notification 43 corresponding to the event A at a position with a highest priority on the notification center interface 403 based on a current notification center interface display scenario. Alternatively, as shown in FIG. 4(d), in a process of displaying a floating interface 404, the electronic device receives an event A, and determines that the event A is an instant occurrence event, and a live notification corresponding to the event A needs to be displayed immediately. In this case, the electronic device may display, by using a floating widget, a live notification 44 corresponding to the event A at a position with a highest priority on a home screen 404 based on a current floating widget display scenario.

For another example, in the display scenarios such as the partial AOD and the status bar, the electronic device displays notification content by using the display style of the capsule display. Optionally, displayed content of a capsule includes, for example, a notification source icon, a theme color of a notification source, and main information. Because a display area of the capsule is small, the electronic device may extract the main information of the notification and display the main information by using the capsule. This helps the user directly determine core information of the notification, a reminder function is implemented, and a display occupation proportion of the notification is effectively reduced.

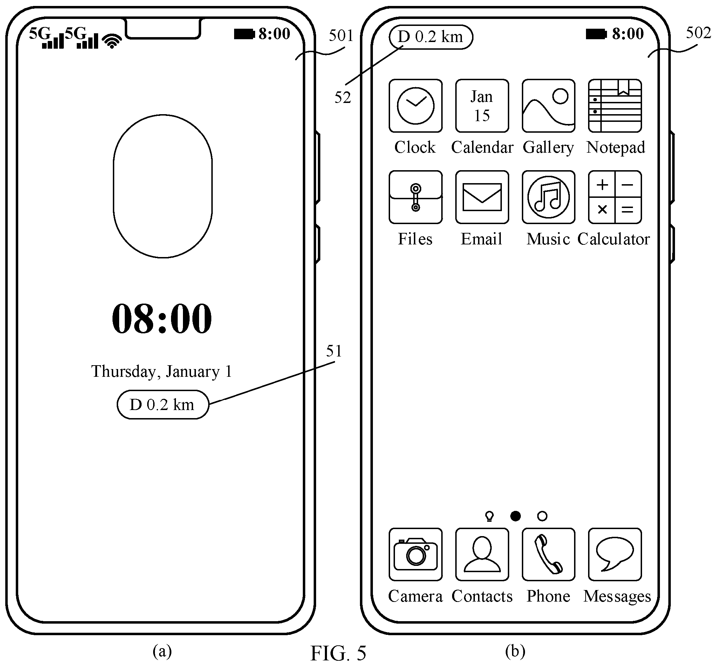

For example, as shown in (a) in FIG. 5, in a process of displaying a partial AOD interface 501, the electronic device receives an event A, and determines that the event A is an instant occurrence event, and a live notification corresponding to the event A needs to be displayed immediately. In this case, the electronic device may display, by using a capsule, a live notification 51 corresponding to the event A on the partial AOD interface 501 based on a current partial AOD display scenario. Alternatively, as shown in (b) in FIG. 5, in a process of displaying a home screen 502, the electronic device receives an event A, and determines that the event A is an instant occurrence event, and a live notification corresponding to the event A needs to be displayed immediately. In this case, the electronic device may display, by using a capsule, a live notification 52 corresponding to the event A in the home screen status bar based on a current desktop display scenario.

Optionally, a service identifier (for example, an application icon), brief content, and the like corresponding to the live notification may be displayed on the capsule. The brief content may be determined by a service.

For another example, in the display scenario like the functional AOD, the electronic device displays notification content by using the display style of the visual image display. In this way, a visual image is used to provide the user with more vivid and interesting content display based on information transmission.

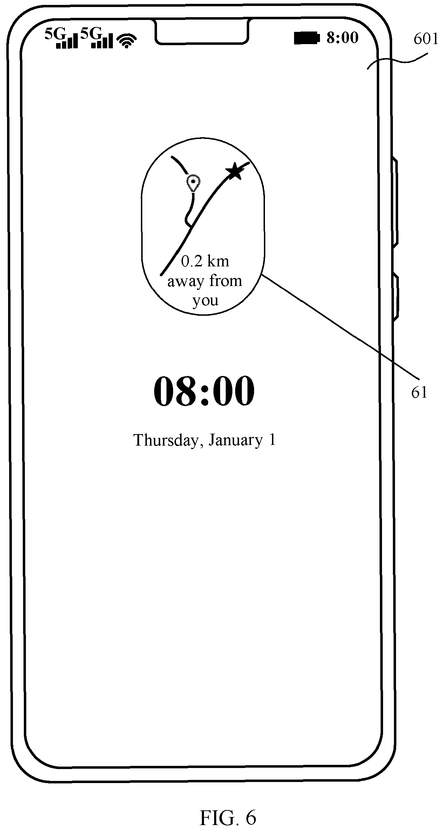

For example, as shown in FIG. 6, in a process of displaying a screen-off interface 601, the electronic device receives an event A, and determines that the event A is an instant occurrence event, and a live notification corresponding to the event A needs to be immediately displayed. In this case, the electronic device may display, by using a visual image, a live notification corresponding to the event A in a function window 61 in the screen-off interface 601 based on a current functional AOD display scenario. For example, if the event A is a food delivery event, a food delivery application may generate a delivery route map corresponding to a food delivery. In this way, the electronic device may display the delivery route map in the function window 61, so that the user can determine a moving position of a rider, estimate delivery time, and the like.

In some embodiments, permissions to display notifications of different display styles are preconfigured in a service. For example, if a notification generated by a service 1 has permissions of the capsule display and the widget display, the electronic device may display, by using a capsule or a widget, the notification generated by the service 1. For another example, if a notification generated by a service 2 has permissions of the widget display and the visual image display, the electronic device may display, by using a widget or a visual image, the notification generated by the service 2. Optionally, different notifications generated by a same service may also have permissions of different display styles. This is not limited in embodiments of this application. Optionally, after generating a notification, the service side selects, based on a current display scenario and a display style permission, a display style that is more suitable for the current display scenario, and invokes a corresponding system interface to write notification content, so as to display the notification.

In some embodiments, if the electronic device or the technology supports more abundant display forms and displayed content, the electronic device may display a notification in more display styles in different display scenarios. For example, the electronic device is a VR/AR device, and the VR/AR device may support information presentation of a 3D model. In this case, the electronic device may display a notification in a 3D display manner. For example, in a process in which the electronic device displays a food delivery notification, a 3D character model corresponding to a rider is displayed on a delivery route map, to improve interaction interest of the user. For another example, the electronic device is a PC, a smart television, or the like that is configured with a more precise keyboard or focus operation, and the electronic device may support configuration of an operable control in a displayed capsule. In this way, the user may directly perform notification interaction by using the capsule, and does not need to start a corresponding service.

In this way, the electronic device properly displays notifications in a timely manner based on different display scenarios, to prevent the user from missing some high-timeliness notifications and improve a notification reminder effect.

In addition, in the different display scenarios, the electronic device adaptively adjusts a display style of a notification, so that the display and operation of the current task are not affected while it is ensured that the notification is displayed.

In addition, the electronic device can effectively and promptly display a notification generated by a third-party service, to ensure integrity and accuracy of the notification.

In some embodiments, with an event progress, corresponding live notification content may change. Therefore, in a process of displaying the live notification, the electronic device may determine, based on an event progress, a change of a display scenario, and the like, whether the live notification needs to be refreshed and displayed.

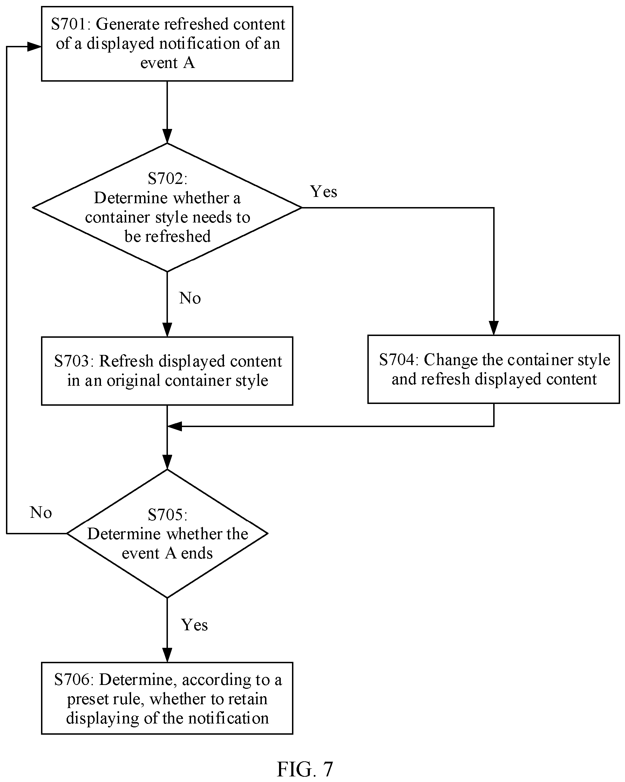

For example, FIG. 7 is a schematic flowchart of another notification display method according to an embodiment of this application. As shown in FIG. 7, the method includes the following steps.

S701: An electronic device generates refreshed content of a displayed notification of an event A.

In some embodiments, in a process of displaying a live notification of the event A, the electronic device determines that the event A is in progress, and notification content of the event A changes with the progress of the event A. In this case, the electronic device may determine the refreshed content of the notification of the event A.

For example, the event A is a food delivery event. After a food delivery is placed, the food delivery event changes with an order status. In this case, the electronic device needs to generate corresponding refreshed content based on the progress of the food delivery event.

S702: The electronic device determines whether a container style needs to be refreshed. If yes, step S704 is performed. If no, step S703 is performed.

In some embodiments, after generating a notification, a service side may invoke a corresponding system interface, and write notification content into a corresponding preset container through the system interface, to implement notification display of a system. In this case, in a display process of the electronic device, a display scenario may change, or a display requirement may change. Therefore, after determining that refreshed content of a notification that is being displayed is generated, the electronic device may determine, based on whether there is a difference between an original display scenario of the notification and a current display scenario, whether there is a difference between features of original displayed content of the notification and the refreshed content, and the like, whether a display style needs to be refreshed. If the electronic device determines that a display container does not need to be refreshed, the electronic device may directly write the refreshed content into an original container, to display a refreshed notification, that is, step S703 is performed. If the electronic device determines that a display container needs to be refreshed, after the display container is refreshed, the electronic device may write the refreshed content into a new container, to display a refreshed notification, that is, step S704 is performed.

Optionally, the container style corresponds to a display style of a subsequent notification. For example, the container style includes a capsule display container, a widget display container, a visual image display container, and the like.

S703: The electronic device refreshes displayed content in an original container style.

In some embodiments, after generating the refreshed content of the notification that is being displayed, the electronic device determines that a current display scenario does not change and a message content feature transferred by the notification does not change. In this case, the electronic device may retain the original container style, and refresh only displayed content in the container, to refresh display of the notification. For example, the electronic device updates only text information, an image, and the like in the notification.

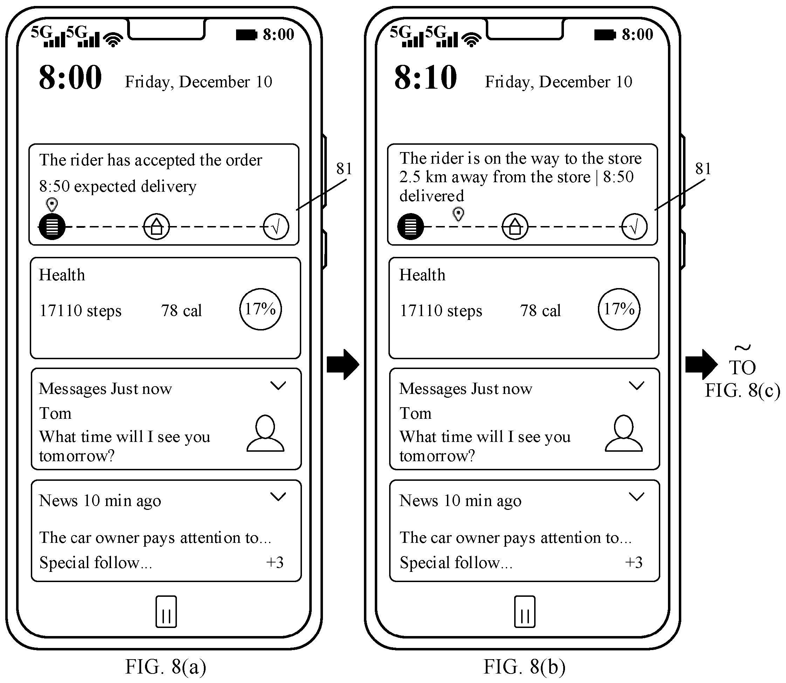

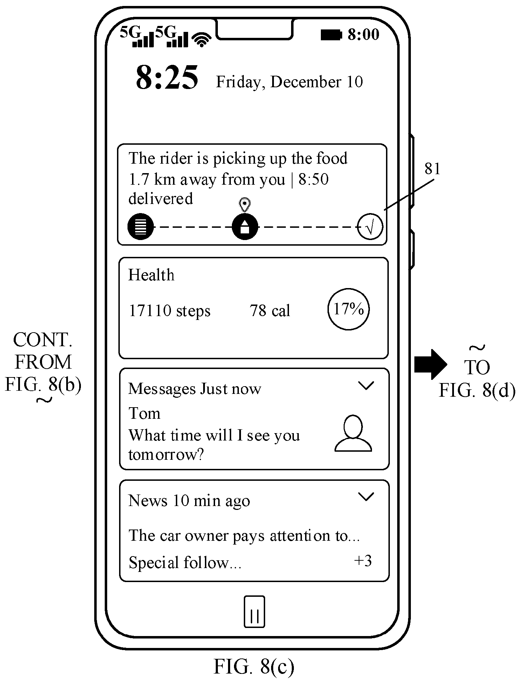

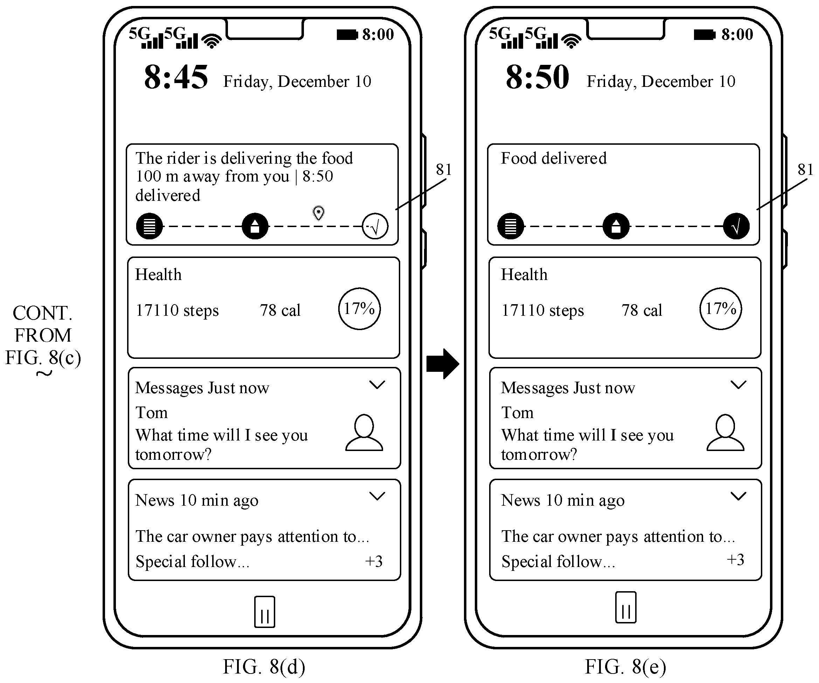

For example, in a food delivery event scenario shown in FIG. 8(a) to FIG. 8(e), the electronic device generates, based on a change of a food delivery process, refreshed content of a food delivery notification corresponding to the food delivery event. If the electronic device keeps displaying a notification center in an entire process of displaying the food delivery notification, the electronic device determines, based on a content feature of the food delivery notification, that a container style of the food delivery notification does not need to be changed. In this case, the electronic device generates refreshed content of the food delivery notification on a corresponding notification node according to a change of the food delivery process, and writes the refreshed content into the original container style. In this process, the electronic device may display a refreshed notification in the notification center. As shown in FIG. 8(a) to FIG. 8(e), the electronic device refreshes displayed content of a food delivery notification 81 in an original container style based on changes of five nodes of a food delivery: The merchant has accepted the order, the rider has accepted the order, the rider is on the way to the store, the rider is delivering the food, and the food has been delivered.

S704: The electronic device changes the container style and refreshes displayed content.

In some embodiments, after generating the refreshed content of the notification that is being displayed, the electronic device determines that at least one of a current display scenario or a message content feature transferred by the notification changes. In this case, the electronic device may determine a container style that is more applicable to the current display scenario or the refreshed content, and write the refreshed content into the changed container style, to refresh display of the notification.

For example, a same container style may not meet optimal display of the refreshed content, in other words, there is a difference between features of the original displayed content and the refreshed content of the notification. In this case, the electronic device may also change the container style when refreshing the displayed content, to ensure an optimal display effect.

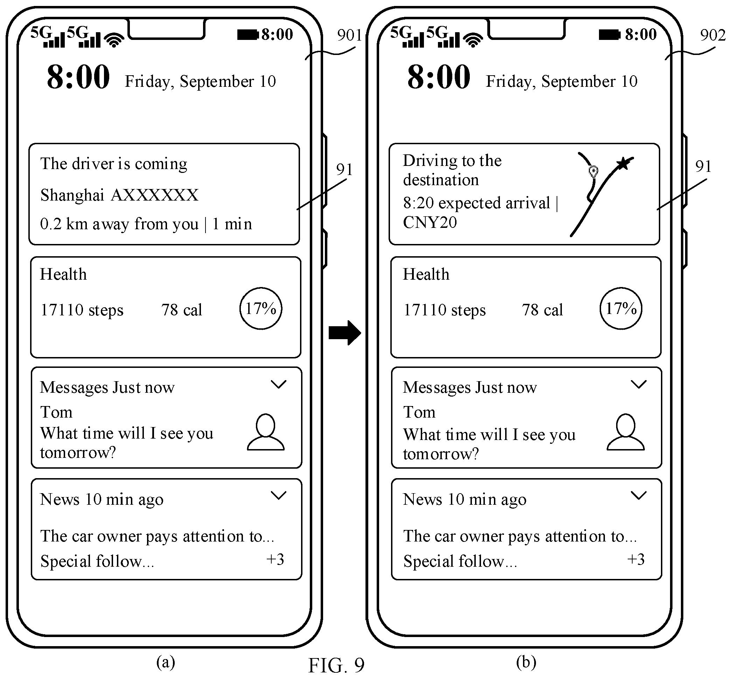

For example, in an interface 901 shown in (a) in FIG. 9, the electronic device displays a notification 91 of a taxi hailing event. Currently, a user does not get on a vehicle, and displayed content in the notification 91 focuses on a license plate number. Subsequently, in a driving process, the user may pay more attention to a driving route. Therefore, in the driving process, as the vehicle travels, the taxi hailing event generates refreshed content of the notification, for example, a driving route changes. In an interface 902 shown in (b) in FIG. 9, in the driving process, the electronic device changes a container style of the notification 91, to display the change of the route more prominently.

In this way, the container style is flexibly switched, so that the user can focus more on important information of the notification. In addition, display effects of notification content with different features are met.

In addition, in step S703 and step S704, the electronic device refreshes, at a same display position, a plurality of pieces of notification content generated by a same event, so that the plurality of notifications of the same event do not occupy too many display positions, and notification display is reduced, thereby avoiding interference with the user's viewing of the notification due to display of the plurality of notifications, and reducing notification redundancy.

S705: The electronic device determines whether the event A ends. If yes, step S706 is performed. If no, step S701 returns to be performed.

S706: The electronic device determines, according to a preset rule, whether to retain displaying of the notification.

In some embodiments, the live notification is more focused on timeliness of the notification. Therefore, after the event ends, the electronic device may no longer display the notification of the event. The electronic device may determine, according to the preset rule, duration after which the notification is not displayed.

Optionally, the service side may preset a preset rule for determining retention duration, and the service side notifies the system of the retention duration of the notification in a process of determining to transmit the notification. Alternatively, the system determines an event type, and determines retention duration of the notification based on the event type. Alternatively, the user sets a preset rule, specifies retention duration of the notification, and the like. Alternatively, a unified display duration limit of a live notification is preset in the system. After the display duration limit after an event corresponding to the live notification ends, the system directly indicates not to display the live notification.

For example, for some notifications with high timeliness such as a call notification and a timer notification, the electronic device may immediately clear the displayed notifications after events end.

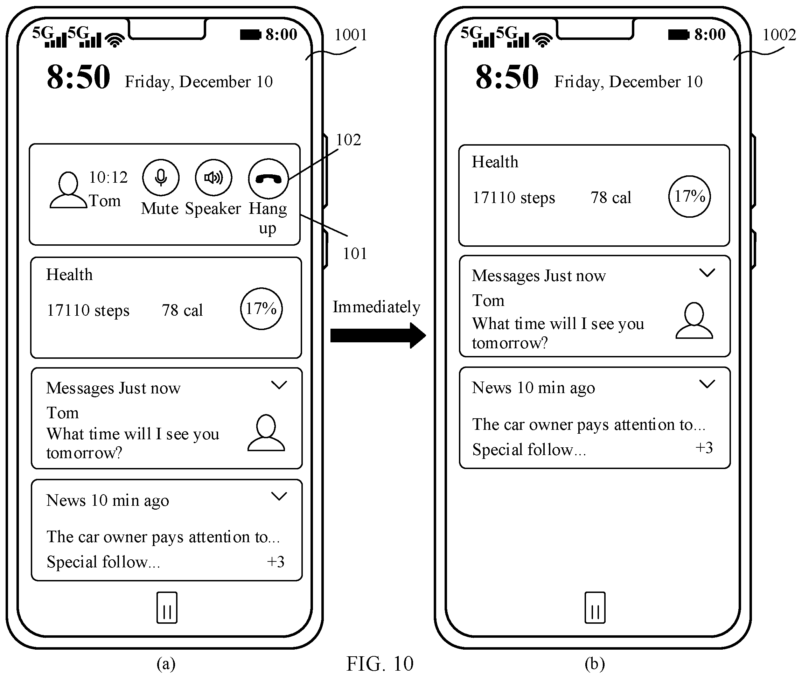

For example, in an interface 1001 shown in (a) in FIG. 10, in a process of displaying a call notification 101 in a notification center, the electronic device detects an operation performed by a user on a hang up control 102, and determines that the user instructs to hang up the call. In this case, the electronic device may end a call event, and an interface 1002 shown in (b) in FIG. 10 no longer displays the call notification in the notification center, that is, immediately cancels the call notification.

For another example, for some notifications such as a takeout progress notification and a vehicle progress notification, after determining that events end, the electronic device may retain the notifications for a period of time and then clear the notifications, to help the user determine event results.

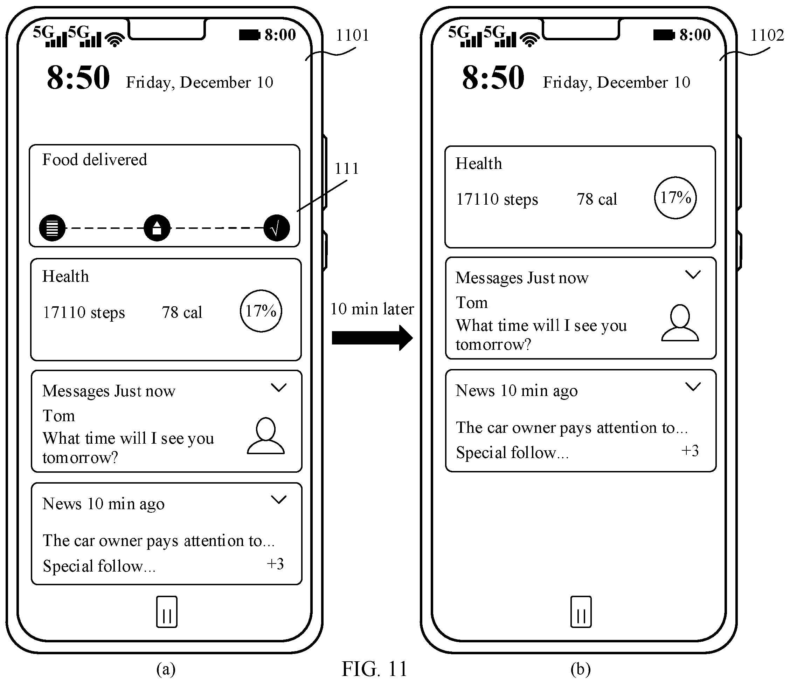

For example, in an interface 1101 shown in (a) in FIG. 11, in a process of displaying a takeout progress notification 111 in a notification center, the electronic device determines that a food delivery has been delivered, and a food delivery event has ended. The electronic device determines, according to a preset rule, that a notification of the food delivery event needs to be retained for 10 minutes after the event ends. In this case, in an interface 1102 shown in (b) in FIG. 11, the electronic device cancels display of the takeout progress notification 111 10 minutes after the food delivery event ends. In this way, the electronic device retains displaying of the takeout progress notification for 10 minutes, so that the user can view the takeout progress notification.

For another example, if display duration is not set for some live notifications in the service, after the system side determines that an event ends, the system side directly clears the live notifications based on the display duration limit. For example, the electronic device clears the live notification one hour after the live notification event ends.

In this way, after the event ends, the electronic device can automatically clear display of the notification according to the preset rule, to avoid that a notification whose validity period expires is suspended on an interface, thereby causing interference to the user.

In some embodiments, in a process of displaying a notification, the electronic device may display detailed content of the notification or perform a corresponding operation in response to an operation of the user in a notification display area. In addition, in a process of viewing the notification, running of a current task of the electronic device is not interrupted.

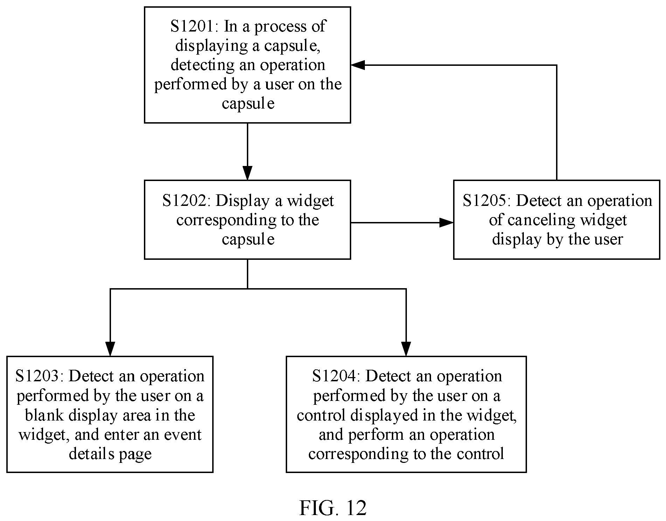

Capsule display is used as an example. FIG. 12 is a schematic flowchart of another notification display method according to an embodiment of this application. As shown in FIG. 12, the method includes the following steps.

S1201: An electronic device detects, in a process of displaying a capsule, an operation performed by a user on the capsule.

S1202: The electronic device displays a widget corresponding to the capsule.

In some embodiments, the electronic device detects a live notification generated by an event A, and displays, in a status bar based on a current display scenario, a capsule corresponding to the live notification. Then, in a process of displaying the capsule, the electronic device detects an operation performed by the user on the capsule, for example, tapping the capsule. In this case, in response to the operation performed by the user on the capsule, the electronic device determines that the user instructs to expand and display the live notification corresponding to the capsule, and may zoom in the capsule into a floating widget, to display more content of the live notification. This helps the user determine details of the live notification.

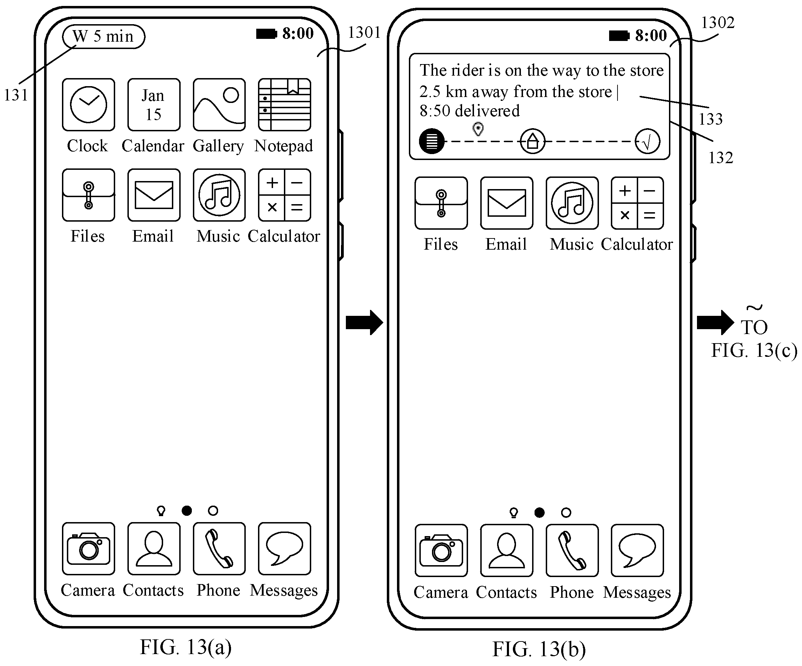

For example, in an interface 1301 shown in FIG. 13(a), in a process in which the electronic device displays a capsule 131 corresponding to a food delivery event, the electronic device detects an operation of tapping the capsule 131 by the user, and then the electronic device can display an interface 1302 shown in FIG. 13(b). In the interface 1302, the electronic device displays a widget 132 corresponding to the capsule 131. In comparison with the capsule 131, a display area of the widget 132 is larger, and more content of the food delivery event can be displayed, to help the user learn of more related information of the food delivery event.

Optionally, the operation performed by the user on the capsule is, for example, an operation performed by the user on a blank display area (non-operation area) of the capsule.

S1203: The electronic device detects an operation performed by the user on a blank display area in the widget, and enters an event details page.

In some embodiments, in a process of displaying the widget corresponding to the capsule, the electronic device detects the operation performed by the user on the blank display area in the widget, and may display the event details page, to help the user learn of related information of the event in more detail. Optionally, the event details page is, for example, a page corresponding to a widget notification in a service.

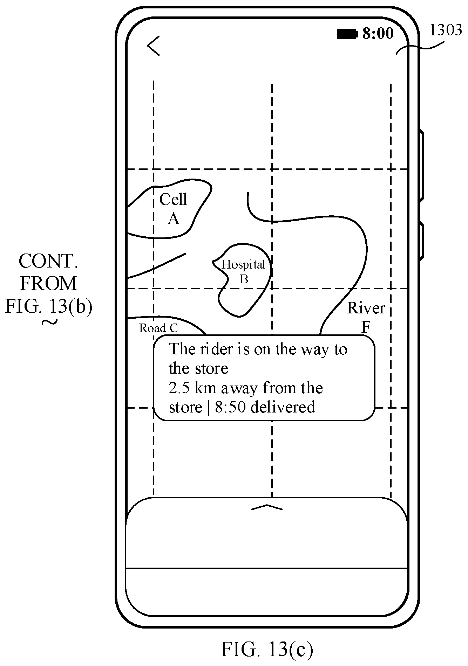

For example, in the interface 1302 shown in FIG. 13(b), in a process of displaying the widget 132 corresponding to the capsule 131, the electronic device detects the operation performed by the user on the blank display area 133 in the widget 132, and determines that the widget 132 displays a notification corresponding to the food delivery event. In this case, in an interface 1303 shown in FIG. 13(c), the electronic device may start a food delivery application that generates the food delivery event, and display an event details page corresponding to notification content displayed on the widget 132, to help the user learn of the related information of the food delivery event in more detail.

S1204: The electronic device detects an operation performed by the user on a control displayed in the widget, and performs an operation corresponding to the control.

In some embodiments, in a process of displaying the widget corresponding to the capsule, the electronic device detects the operation performed by the user on the control displayed in the widget, where it may be determined that the operation is used to instruct the electronic device to perform the operation corresponding to the control. In this case, the electronic device may perform the operation corresponding to the control in response to the operation performed by the user. Optionally, the service preconfigures functions of one or more controls displayed on the widget. In a process of writing widget notification content, the service sends control function information to a system, so that the system may perform a corresponding operation in response to a user operation. Alternatively, after detecting the operation performed by the user on the control, a system feeds back the detected operation to the service, and the service determines the operation corresponding to the control.

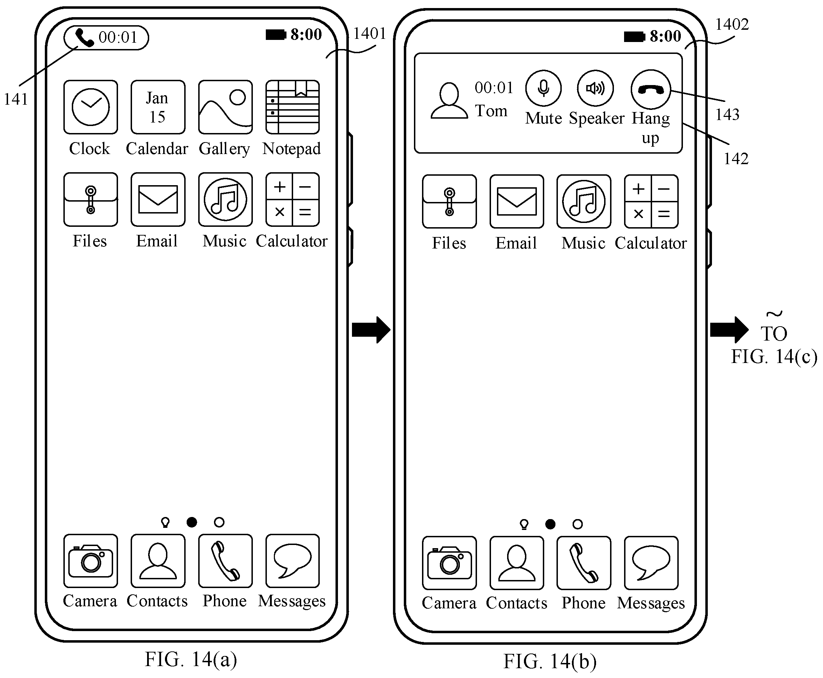

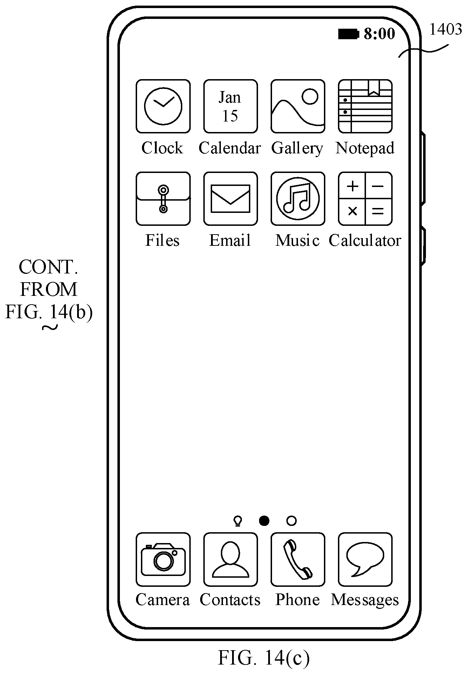

For example, in an interface 1401 shown in FIG. 14(a), in a process in which the electronic device displays a capsule 141 corresponding to a call event, the electronic device detects an operation performed by the user on the capsule 141, displays an interface 1402 shown in FIG. 14(b), and displays, in the interface 1402, a widget 142 corresponding to the capsule. Then, the electronic device detects an operation performed by the user on a hang up control 143 displayed on the widget 142, and determines that the user instructs to hang up the call. In this case, the electronic device may end the call event corresponding to the current widget 142. In addition, in an interface 1403 shown in FIG. 14(c), after the call event ends, the electronic device no longer displays a notification corresponding to the call event, for example, no longer displays the widget 142 or the capsule 141.

S1205: The electronic device detects an operation of canceling widget display by the user.

In some embodiments, after step S1202, the method further includes step S1205. The operation of canceling widget display is, for example, a slide gesture operation, or an operation on a display area outside a widget display area. For example, in a process of displaying the widget, the electronic device detects a slide up operation of the user, and determines that the user cancels displaying the widget, so that widget display may be restored to original capsule display. Alternatively, in a process of displaying the widget, the electronic device detects the operation performed by the user on the display area outside the widget display area, so that widget display may be restored to original capsule display. Alternatively, after displaying the widget corresponding to the capsule in response to the operation performed by the user, if the electronic device does not detect, within preset time, the operation performed by the user on the widget, the electronic device may automatically restore widget display to original capsule display.

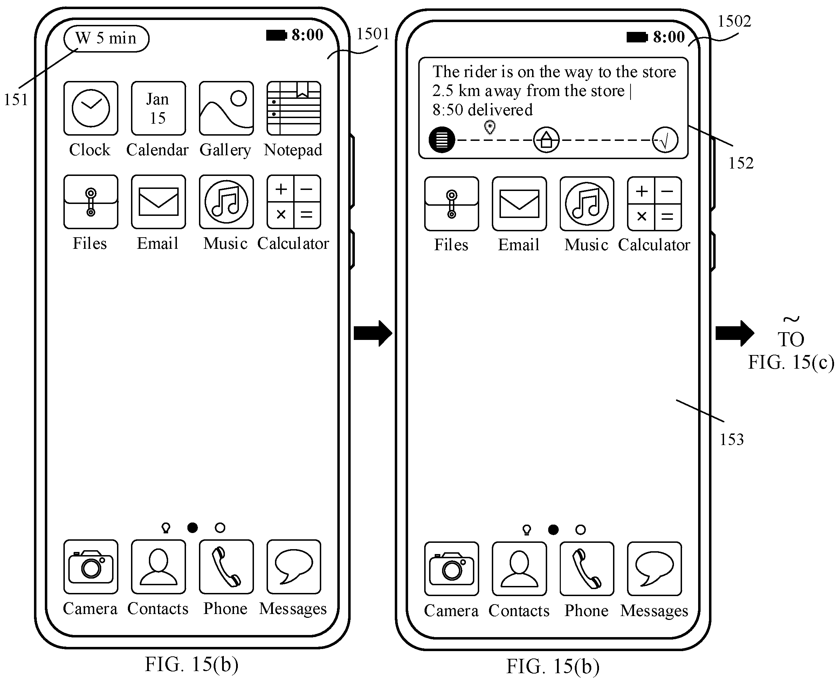

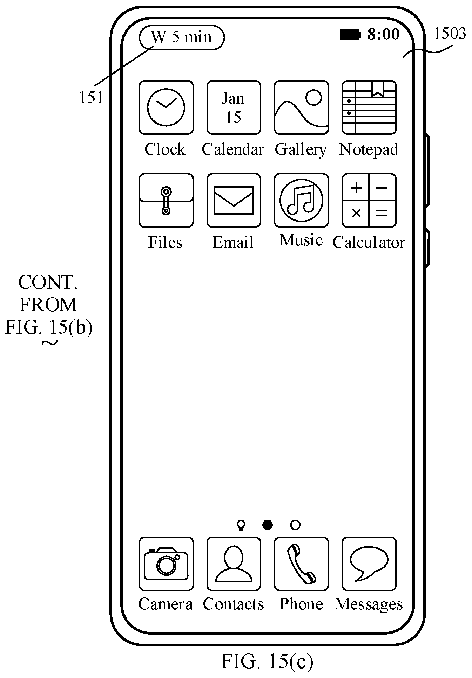

For example, in an interface 1501 shown in FIG. 15(a), in a process in which the electronic device displays a capsule 151 corresponding to a food delivery event, the electronic device detects an operation of tapping the capsule 151 by the user, and then the electronic device can display an interface 1502 shown in FIG. 15(b). In the interface 1502, the electronic device displays a widget 152 corresponding to the capsule 151. In a process of displaying the widget 152, the electronic device detects a slide up operation performed by the user on the widget 152, or detects an operation (for example, an operation of tapping a blank area on a home screen or an operation of tapping an icon displayed on a home screen) performed by the user on a display area 153 outside the widget 152, and then determines that the user instructs to cancel widget display. In this case, in an interface 1503 shown in FIG. 15(c), the electronic device may restore the widget 152 to be displayed in the original capsule 151.

Optionally, in the foregoing process of changing a display style of the notification, display of the capsule or the widget does not affect running of a current task of the electronic device.

In this way, based on a user requirement, the electronic device may display brief information of a notification by using a status bar capsule, or may display detailed information of a notification by using a widget. A user operation is simple and a display style is lightweight, to help the user consider continuity of an original task in different scenarios.

In the operation scenarios of the user for the notification shown in FIG. 12 to FIG. 15(c), a process of switching between capsule display and widget display is used as an example to describe the process of changing the display style of the notification. It should be understood that, in a process of displaying a notification in another display form, the electronic device may also switch, in response to an operation performed by the user on the notification, a display form of a larger display area or a smaller display area, to display the notification corresponding to the current event. This meets a requirement of a user for notification content while considering continuity of the original event.

In some embodiments, in a process of displaying a live notification by the electronic device, a live notification generated by a new event may need to be displayed, that is, the electronic device needs to display a plurality of live notifications. In this case, the electronic device may display the plurality of live notifications according to a preset sorting rule.

Optionally, the preset sorting rule includes, for example, one or more of the following: a notification creation time sequence, a notification node refresh time sequence, another time sequence of pinning an important type, a priority sequence determined by the system based on an event type, intelligent sorting based on data used or viewed by the user, a sequence manually set by the user, and a notification type.

The following describes the process of displaying the plurality of live notifications.

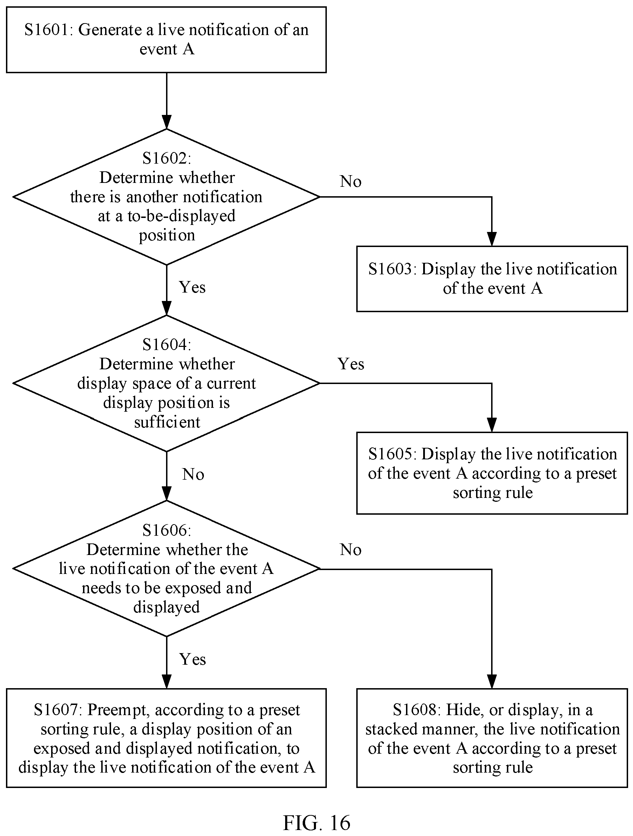

For example, FIG. 16 is a schematic flowchart of another notification display method according to an embodiment of this application. As shown in FIG. 16, the method includes the following steps.

S1601: An electronic device generates a live notification of an event A.

S1602: The electronic device determines whether there is another notification at a to-be-displayed position. If yes, step S1604 is performed. If no, step S1603 is performed.

In some embodiments, the electronic device generates a notification of the event A, and determines that the notification is the live notification and needs to be displayed immediately. The electronic device may determine, based on a display permission and a current display scenario, a display position at which the live notification is to be displayed. In this case, the electronic device may determine whether there is another notification at the to-be-displayed position. If there is no other notification at the to-be-displayed position, the electronic device may display the live notification at the determined display position, in other words, step S1603 is performed. If there is another notification at the to-be-displayed position, the electronic device may determine whether remaining display space at the to-be-displayed position meets a display requirement of the live notification, in other words, step S1604 is performed.

S1603: The electronic device displays the live notification of the event A.

In some embodiments, after generating the live notification of the event A, the electronic device determines that there is no other notification at the to-be-displayed position. In this case, the electronic device may directly display the live notification at the determined to-be-displayed position.

Optionally, for a method for determining, by the electronic device, that the notification generated by the event A is the live notification, a display manner of the live notification, and a display position of the live notification, refer to the methods in the foregoing embodiments. Details are not described herein again.

S1604: The electronic device determines whether display space of a current display position is sufficient. If yes, step S1605 is performed. If no, step S1606 is performed.

In some embodiments, limited by a size of a display of the electronic device, the electronic device can completely display only a part of a notification at a part of the display position. For example, a common mobile phone has a small width, and a maximum of one notification capsule is displayed in a status bar, and other notification capsules can only be hidden or blocked by the currently displayed notification capsule. For another example, because a length of the electronic device is limited, a full-screen AOD, a notification center, or the like can completely display only a limited quantity of notifications, and other notifications can only be stacked to display brief information or hidden.

In some embodiments, after generating the live notification of the event A, the electronic device determines that there is another notification at the to-be-displayed position. In this case, the electronic device may determine whether display space of the to-be-displayed position is sufficient, that is, whether the to-be-displayed space meets a display requirement of the live notification of the event A. If the display space of the to-be-displayed position is sufficient, the electronic device may display the live notification, in other words, step S1605 is performed. If the display space of the to-be-displayed position is insufficient, the electronic device may further determine whether the live notification needs to be exposed and displayed, in other words, step S1606 is performed.

S1605: The electronic device displays the live notification of the event A according to a preset sorting rule.

In some embodiments, after generating the live notification of the event A, the electronic device determines that the display space of the to-be-displayed position is sufficient. In this case, the electronic device may determine the display position of the live notification according to the preset sorting rule, to display the live notification at the to-be-displayed position.

It should be understood that the to-be-displayed position of the live notification may be used to display at least one of the live notification or a common notification, where a display priority of the live notification is higher than that of the common notification. In this case, when determining whether the display space of the to-be-displayed position is sufficient and determining, according to the preset sorting rule, display of the live notification, the electronic device needs to consider notifications of various notification types that have been displayed at the to-be-displayed position, for example, including a live notification and a common notification.

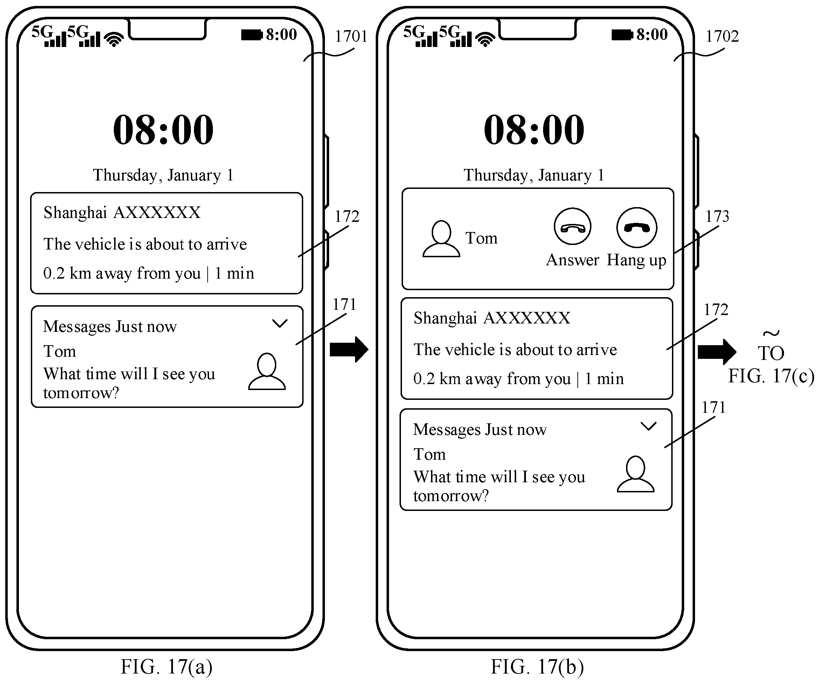

For example, in an interface 1701 shown in FIG. 17(a), a full-screen AOD displayed by the electronic device includes a plurality of notifications, and the plurality of notifications include an SMS message notification 171 and a taxi hailing order notification 172. The SMS message notification 171 is a common notification, and the taxi hailing order notification 172 is a live notification. In this case, a display priority of the taxi hailing order notification 172 is higher than a display priority of the SMS message notification 171, that is, the taxi hailing order notification 172 is displayed at a display position with a highest priority.

Then, the electronic device determines that a call event is received, and generates a call notification corresponding to the call event, where the call notification is a live notification. The electronic device determines that space of a display position of a to-be-displayed notification in the current interface 1701 is sufficient. In addition, the electronic device determines, according to the preset sorting rule, that the call notification meets a requirement of the preset sorting rule of pinning the important type. In this case, in an interface 1702 shown in FIG. 17(b), the electronic device displays a call notification 173 at a pinned position with a highest priority in the notification display position.

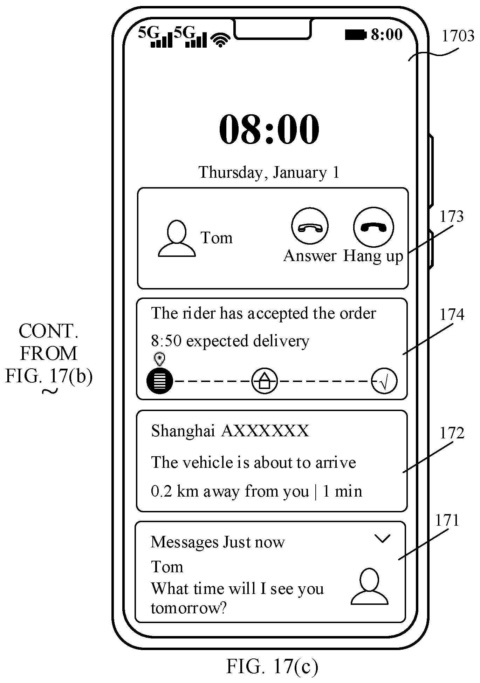

Then, the electronic device determines that a food delivery event is received, and generates a food delivery notification corresponding to the food delivery event, where the food delivery notification is a live notification. The electronic device determines that space of a display position of a to-be-displayed notification in the current interface 1702 is sufficient. In addition, it is determined, according to the preset sorting rule, that the SMS message notification 171 is a common notification, and has a lowest display priority. Among the remaining three live notifications, the call notification 173 is an important event notification, and the display priority is the highest. According to a creation or node refresh time sequence, the food delivery notification 174 is the latest notification. Therefore, a display priority of the food delivery notification 174 is higher than a display priority of the taxi hailing order notification 172. Therefore, the electronic device determines that a display priority sequence of a plurality of to-be-displayed notifications at a display position is: the call notification 173 > the food delivery notification 174 > the taxi hailing order notification 172 > the SMS message notification 171. In this case, in an interface 1703 shown in FIG. 17(c), the electronic device sequentially displays the plurality of notifications at the notification display position based on the determined display priority sequence.

In some examples, in another display scenario, if the display space of the to-be-displayed position is sufficient, the electronic device may also determine a display order of the to-be-displayed live notifications according to the preset sorting rule.

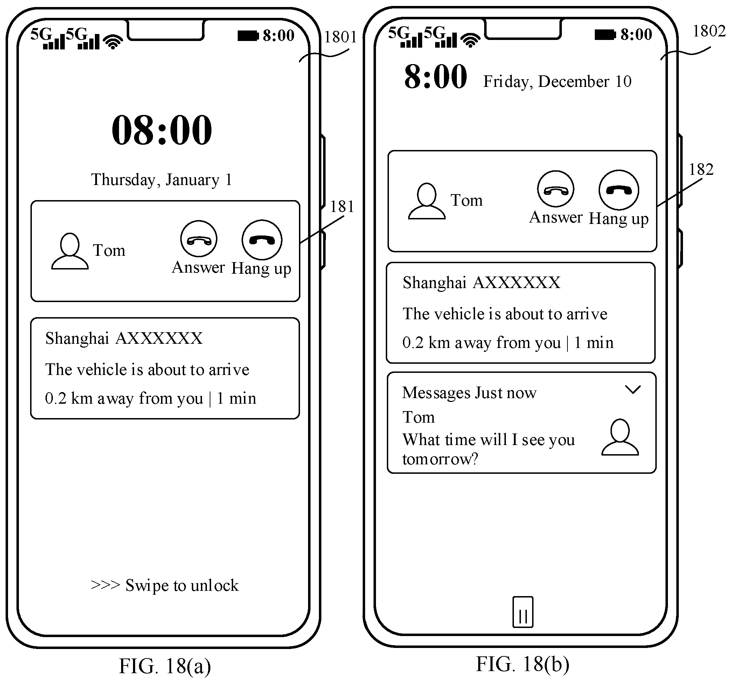

For example, as shown in FIG. 18(a), in a process of displaying a lock screen 1801, the electronic device receives a call notification generated by a call event, and in response to sufficient display space of a current to-be-displayed position, displays a call notification 181 at a pinned position with a highest priority in the to-be-displayed position.

For another example, as shown in FIG. 18(b), in a process of displaying a notification center interface 1802, the electronic device receives a call notification generated by a call event, and in response to sufficient display space of a current to-be-displayed position, displays a call notification 182 at a pinned position with a highest priority in the to-be-displayed position.

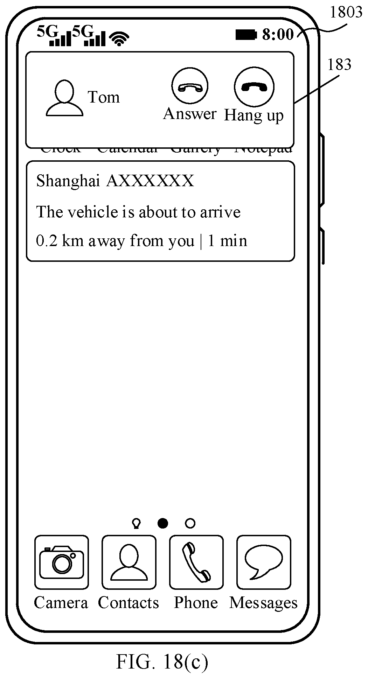

For another example, as shown in FIG. 18(c), in a process of displaying a home screen 1803, the electronic device receives a call notification generated by a call event, and in response to sufficient display space of a current to-be-displayed position, displays a call notification widget 183 at a pinned position with a highest priority in the to-be-displayed position.

In this way, in a plurality of display scenarios, if display space of a to-be-displayed position is sufficient, the electronic device may adaptively display a generated live notification according to a preset sorting rule. This prevents the user from missing the live notification according to a proper display sequence, and ensures an important live notification to be preferentially displayed.

S1606: The electronic device determines whether the live notification of the event A needs to be exposed and displayed. If yes, step S1607 is performed. If no, step S1608 is performed.

In some embodiments, after generating the live notification of the event A, the electronic device determines that the display space of the to-be-displayed position is insufficient. In this case, the electronic device may determine an exposed and displayed notification at the to-be-displayed position, and determine, according to the preset sorting rule, whether a display priority of the live notification is higher than that of the exposed and displayed notification. If the display priority of the live notification is higher than that of the exposed and displayed notification, the electronic device may preempt the display position of the exposed and displayed notification, in other words, step S1607 is performed. If the display priority of the live notification is not higher than that of the exposed and displayed notification, the electronic device may hide the live notification or display the live notification in a stacked manner, in other words, step S1608 is performed.

S1607: The electronic device preempts, according to the preset sorting rule, a display position of an exposed and displayed notification, to display the live notification of the event A.

In some embodiments, after generating the live notification of the event A, the electronic device determines that the display space of the to-be-displayed position is insufficient. In addition, the electronic device determines that a display priority of the to-be-displayed live notification is higher than a display priority of the exposed and displayed notification. In this case, the electronic device may preempt the display position of the exposed and displayed notification, to display the to-be-displayed live notification.

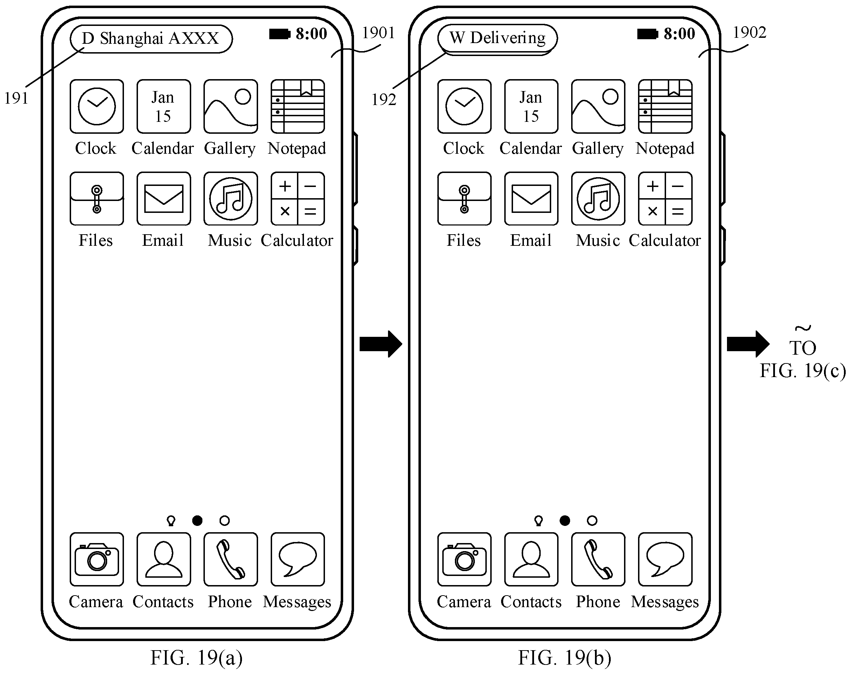

For example, in an interface 1901 shown in FIG. 19(a), in a process in which the electronic device displays a taxi hailing notification 191 by using a status bar capsule, the electronic device generates a food delivery notification of a food delivery event in response to a user operation for creating the food delivery event. The electronic device determines that the food delivery notification also needs to be displayed by using the status bar capsule, and the electronic device may display only one capsule in the status bar due to a limited size of a display. In other words, display space of a to-be-displayed position of the food delivery notification is insufficient. In this case, the electronic device determines, according to the preset sorting rule, whether a display priority of the food delivery notification is higher than that of the exposed and displayed taxi hailing notification. For example, the electronic device determines, based on a creation time sequence, that the display priority of the food delivery notification is higher than that of the exposed and displayed taxi hailing notification. In this case, in an interface 1902 shown in FIG. 19(b), the electronic device exposes and displays the food delivery notification 192 in the status bar by using a capsule, that is, the food delivery notification preempts a display position of the taxi hailing notification.

Optionally, in the capsule display manner, a blocked capsule may also expose and display a part of an edge display area, to notify the user that there are a plurality of notifications at the current display position. For example, as shown in the interface 1902, the electronic device exposes and displays the food delivery notification 192, and exposes and displays, below the food delivery notification 192, an edge display area for displaying the taxi hailing notification 191. In this way, the user may know that there is a notification that is currently blocked by the food delivery notification 192.

Optionally, the electronic device may expose and display, in one or more directions, such as below, above, left, right, lower right, and upper right, of the exposed and displayed notification, a part of an edge display area of a blocked capsule. That is, the electronic device displays the plurality of notifications in a plurality of manners such as vertical stack display and horizontal stack display.

Optionally, when there are a plurality of blocked notifications at the display position, the electronic device may expose and display, in a stacked manner, edge display areas of all the blocked notifications, to help the user determine a specific quantity of the blocked notifications at the display position. Alternatively, the electronic device may expose and display only an edge display area of a part of the blocked notifications, to notify the user that there is a blocked notification at the display position, and save display space.

It should be understood that the foregoing describes a preemption display process of a notification by using an example in which a plurality of notifications are displayed by using capsules in the stacked manner. In another display scenario, the electronic device may display the plurality of notifications in the foregoing stacked manner.

In this way, when display space is insufficient, the electronic device may also preferentially display an important live notification in a manner of preempting a display position, to avoid invalidity of the live notification due to exceeding a timeliness requirement of the live notification.

In some embodiments, after preempting the display position of the originally exposed and displayed notification, the electronic device determines that an event corresponding to the currently exposed and displayed live notification ends, and may determine, according to the preset rule, whether to retain displaying of the notification. If the electronic device determines that display of the notification indicating that the event ends does not need to be retained, the blocked notification may be exposed.

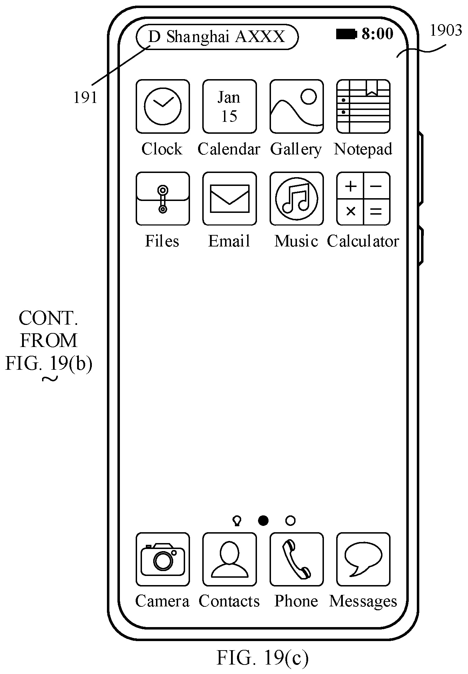

For example, in the interface 1902 shown in FIG. 19(b), the food delivery notification preempts the display position of the taxi hailing notification, and in a process in which the status bar exposes and displays the food delivery notification 192, the electronic device determines that the food delivery event ends. In addition, the electronic device determines, according to the preset rule, that the food delivery notification 192 needs to be retained for another 10 minutes. In this case, in an interface 1903 shown in FIG. 19(c), after 10 minutes, the electronic device stops displaying the food delivery notification 192, and exposes and displays the previously blocked taxi hailing notification 191.

In this way, the electronic device adjusts, based on a change status of a live notification, a display sequence of a plurality of displayed live notifications, to ensure display timeliness of the live notifications, and prevent the user from missing an important live notification.

S1608: The electronic device hides, or displays, in a stacked manner, the live notification of the event A according to a preset sorting rule.

In some embodiments, after generating the live notification of the event A, the electronic device determines that the display space of the to-be-displayed position is insufficient. In addition, the electronic device determines that a display priority of the to-be-displayed live notification is lower than that of the exposed and displayed notification. In this case, the electronic device may hide, or display, in a stacked manner, the live notification of the event A.

Optionally, when there are a plurality of notifications that are hidden, or displayed, in a stacked manner, by the electronic device, the electronic device may hide, or display, in a stacked manner, the plurality of notifications after determining a display priority according to the preset sorting rule. In this way, after ending displaying the exposed notification, the electronic device may directly expose and display an originally hidden or stacked notification with a highest display priority.

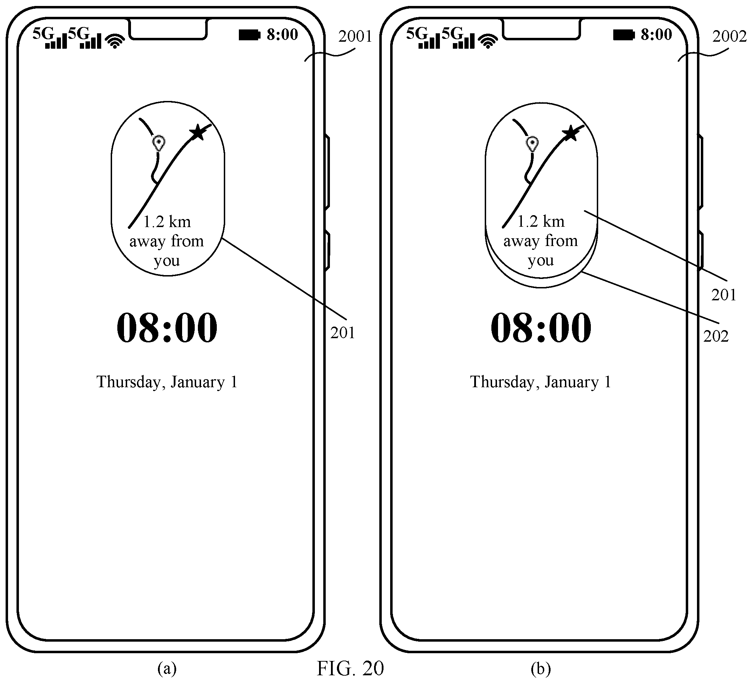

For example, in an interface 2001 shown in (a) in FIG. 20, in a functional AOD scenario, a function window may display only one notification. In this case, as shown in the interface 2001, the electronic device receives a new live notification 202 in a process of displaying a live notification 201 in the function window. The electronic device determines that display space of a to-be-displayed position of the live notification 202 is insufficient. In addition, the electronic device determines, according to the preset sorting rule, that a display priority of the live notification 202 is lower than that of the live notification 201. In this case, the electronic device may hide the live notification 202, in other words, keep the live notification 201 exposed and displayed.

Alternatively, in an interface 2002 shown in (b) in FIG. 20, the electronic device displays the live notification 202 in a stacked manner. To be specific, while keeping displaying the live notification 201, the electronic device exposes a part of the live notification 202 at a lower layer of the live notification 201, so that the user determines that there are a plurality of live notifications in the current function window.

Optionally, when the electronic device displays a plurality of notifications in a stacked manner, the electronic device may adjust display of the plurality of notifications in response to a user operation. For example, in the interface 2002 shown in (b) in FIG. 20, in a process in which the electronic device exposes and displays the live notification 201 and displays the live notification 202 in a stacked manner, the electronic device detects a slide operation of the user in the function window, and then can expose the stacked live notification 202.

It should be understood that, if the electronic device displays more notifications in the function window in a stacked manner, in response to a plurality of slide operations of the user, the electronic device may sequentially switch to expose and display corresponding notifications.

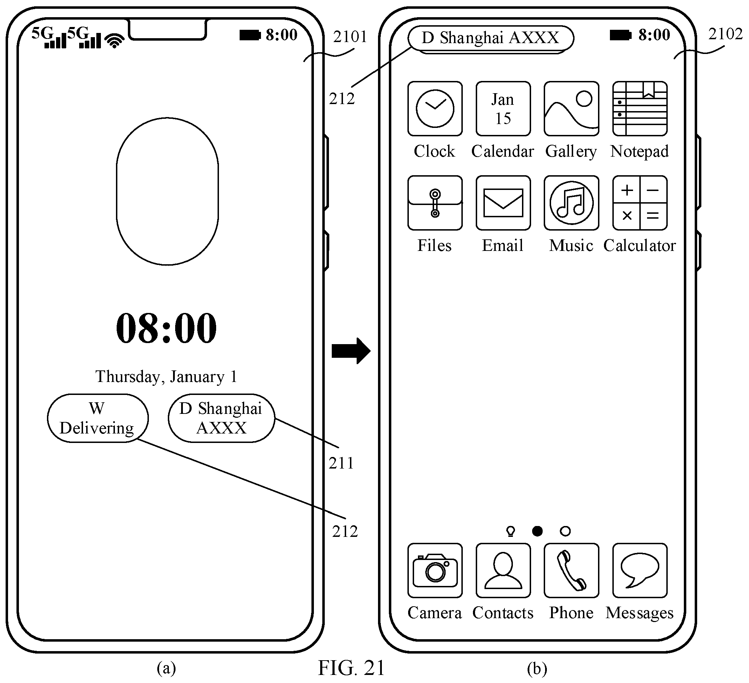

For another example, as shown in an interface 2101 shown in (a) in FIG. 21, in a partial AOD scenario, the electronic device displays a maximum of two notification capsules. In this case, when determining to generate more notification capsules, the electronic device may preempt, according to the preset sorting rule, a display position of an original exposed notification capsule, or hide, or display, in a stacked manner, a new notification capsule.

For another example, as shown in the interface 2101 shown in (a) in FIG. 21, in the partial AOD scenario, the electronic device displays a taxi hailing notification 211 and a food delivery notification 212 in a capsule display manner. Then, in response to a user operation, in an interface 2102 shown in (b) in FIG. 21, the electronic device displays a home screen. For example, a status bar displays a maximum of one capsule notification. In this case, the electronic device may determine that display space of a current display position is insufficient, and the taxi hailing notification 211 and the food delivery notification 212 cannot be displayed at the same time. In this case, the electronic device determines display priorities of a plurality of to-be-displayed notifications based on the preset sorting rule. For example, a display priority of the food delivery notification 212 is higher than a display priority of the taxi hailing notification 211. Therefore, the electronic device may expose and display the food delivery notification 212, and hide and display the taxi hailing notification 211.

In this way, when the display space is insufficient, the electronic device may temporarily hide some notifications or display some notifications in the stacked manner, so that the user can also view these notifications subsequently. In addition, the live notification has a high timeliness and a high update speed. Some notifications are first hidden or displayed in the stacked manner, so that the user can also be prevented from missing these notifications.

In some embodiments, in a process in which the electronic device hides, or displays, in a stacked manner, a part of notifications, in response to a user operation, the electronic device may also expand and display a hidden or stacked notification, to help the user determine a notification display status.

Optionally, the electronic device may display a hidden or stacked notification by switching a display manner, to help the user determine notification details.

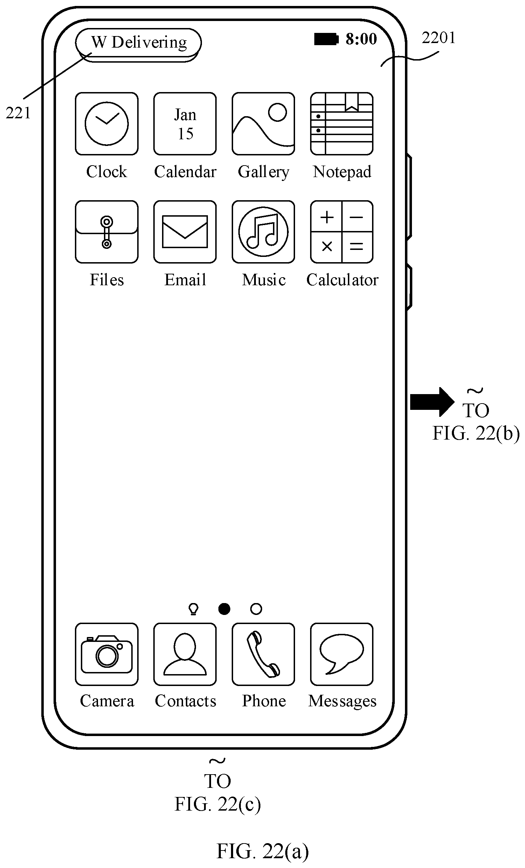

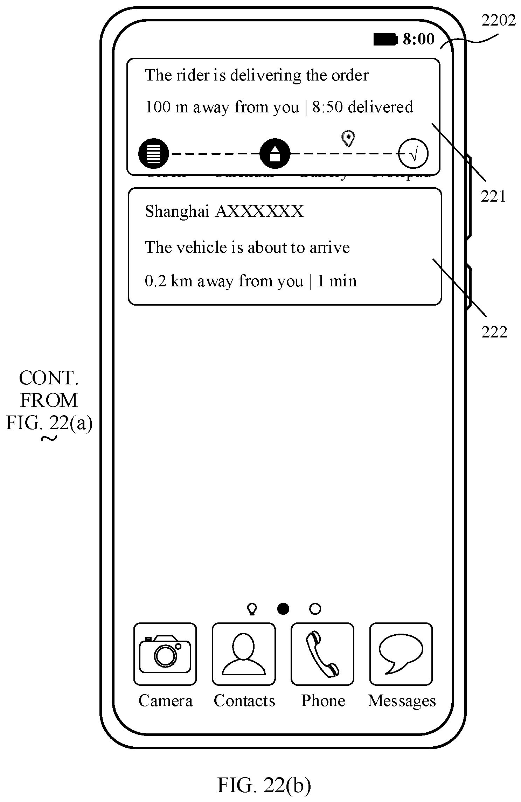

For example, in an interface 2201 shown in FIG. 22(a), the electronic device displays a food delivery notification 221 in a status bar by using a capsule, and there is further a taxi hailing notification blocked by the food delivery notification 221 in the status bar. In response to an operation performed by the user on the food delivery notification 221, in an interface 2202 shown in FIG. 22(b), the electronic device may expand and display details pages of the plurality of notifications displayed in the status bar by using the capsule. For example, the electronic device displays the food delivery notification 221 and the taxi hailing notification 222 by using a floating widget. Optionally, the plurality of floating widgets may be displayed in a style like tiled, stacked, or 3D in-depth display.

Optionally, the electronic device may display a limited quantity of floating widgets due to a limited size of a display of the electronic device. Therefore, a quantity of stacked capsules in the status bar may be preset in the electronic device, to avoid that a quantity of floating widgets that are subsequently expanded in response to a user operation exceeds a quantity threshold of floating widgets that can be displayed by the electronic device. For example, the quantity threshold is 5.

Optionally, in a process of displaying the interface 2202, in response to a slide operation performed after the user selects a floating widget, the electronic device may adjust a display sequence of the plurality of floating widgets. In this way, the user can view the notification details at the optimal visual effect position.

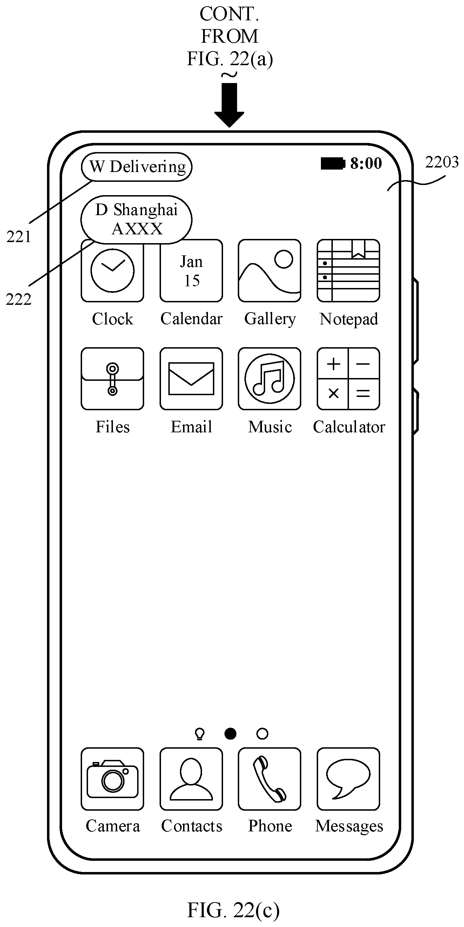

For another example, in a scenario shown in FIG. 22(a), in response to an operation performed by the user on the food delivery notification 221, in an interface 2203 shown in FIG. 22(c), the electronic device may expand and display a plurality of capsules, for example, display the food delivery notification 221 and the taxi hailing notification 222 by using the capsules. In this way, when learning of the plurality of notifications displayed in a stacked manner, the user may select a notification whose details page needs to be viewed. For example, in a process of displaying the interface 2203, in response to an operation performed by the user on the taxi hailing notification 222, the electronic device may display detailed information of the taxi hailing notification 222 by using a floating widget.

In this way, when display space is limited, the electronic device may determine, through a simple operation, a hidden or stacked notification, to avoid a case in which the user misses the notification because the notification is hidden or stacked.

In some embodiments, in step S1601, the live notification of the event A may be a first live notification of the event A that is newly generated currently. Alternatively, the live notification of the event A may also be a live notification that is of the event A and that is updated on a node in response to an event status change. In this case, when the node is updated, a notification at a rear position may also temporarily preempt a display position of a notification at a front position, to be exposed and displayed, so that the user can determine a notification update status.

Optionally, after the notification preempts the front position to be exposed and displayed for a period of time, the electronic device may restore exposure and display of the original notification at the front position, to ensure that a notification with high importance (namely, a notification with a high priority) is preferentially displayed.

Optionally, the front position indicates a display position at which display can be exposed. The rear position indicates a hidden or stacked display position.

The following describes in detail a process in which a notification temporarily preempts the front position for display.

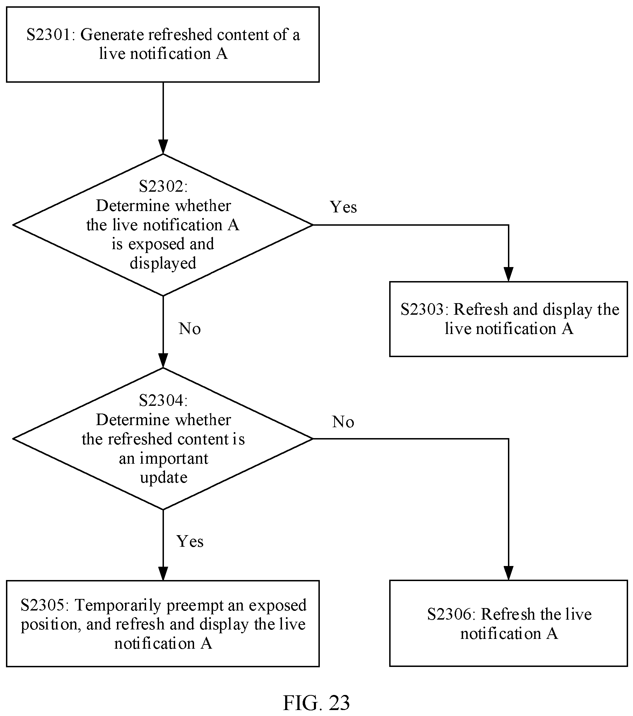

For example, FIG. 23 is a schematic flowchart of another notification display method according to an embodiment of this application. As shown in FIG. 23, the method includes the following steps.

S2301: An electronic device generates refreshed content of a live notification A.

In some embodiments, in a process of displaying the live notification A, the electronic device determines that a node that generates an event of the live notification A is updated, and generates refreshed content of the live notification.

S2302: The electronic device determines whether the live notification Ais exposed and displayed. If yes, step S2303 is performed. If no, step S2304 is performed.

In some embodiments, after generating the refreshed content of the live notification A, the electronic device determines that an original live notification A is exposed and displayed at a front position and at a to-be-displayed position. In this case, the electronic device may directly refresh and display the live notification A, in other words, step S2303 is performed. Alternatively, if the electronic device determines that an original live notification A is hidden or displayed in a stacked manner at a rear position and at a to-be-displayed position, the electronic device may determine whether the refreshed content of the live notification A is an important update, to determine whether a front position needs to be temporarily preempted for display, in other words, step S2304 is performed.

S2303: The electronic device refreshes and displays the live notification A.

In some embodiments, in a process in which the electronic device determines that the live notification A is exposed and displayed at the front position, the live notification A generates the refreshed content, and then the electronic device may directly display a refreshed live notification A at the original front position based on the refreshed content.

In some other embodiments, in a process in which the electronic device determines that the live notification A is exposed and displayed at the front position, the live notification A generates the refreshed content. In addition, the electronic device further determines that a container style does not need to be refreshed. In this case, the electronic device may directly display a refreshed live notification A at the original front position based on the refreshed content.

S2304: The electronic device determines whether the refreshed content is an important update. If yes, step S2305 is performed. If no, step S2306 is performed.

In some embodiments, after obtaining the refreshed content, the electronic device determines whether the user needs to be immediately notified of the refreshed content. If the user needs to be immediately notified of the refreshed content, the electronic device may determine that the refreshed content is an important update. If the user does not need to be immediately notified of the refreshed content, the electronic device may determine that the refreshed content is not an important update.

In some embodiments, the electronic device determines to temporarily preempt the front position to expose and display the refreshed content, in other words, step S2305 is performed. If the electronic device determines that the current refreshed content is not an important update, the electronic device may directly refresh the displayed content of the live notification A. When the live notification A needs to be displayed subsequently, the electronic device may display the refreshed displayed content, in other words, step S2306 returns to be performed.

S2305: The electronic device temporarily preempts an exposed position, and refreshes and displays the live notification A.

In some embodiments, temporarily preempting the front position to expose and display the live notification A is to help the user pay attention to the refreshed content of the live notification A in a timely manner. Therefore, after temporarily preempting the exposed position, and refreshing and displaying the live notification A, the electronic device may attract attention of the user based on a dynamic effect or a visual effect. Stay duration in this phase is T1. Then, after the duration T1, the electronic device may keep displaying the live notification A for duration T2, so that the user confirms specific refreshed content of the live notification A. That is, temporary preemption duration of the live notification A is (T1+T2).

Optionally, after the temporary preemption duration, the electronic device may restore display of the notification at the original front position, and hide the live notification or display the live notification in a stacked manner. Optionally, in a process of restoring the display of the notification at the original front position, the electronic device may restore the display of the notification at the original front position by using an effect that is the same as a dynamic effect or a visual effect of temporarily preempting the front position, so that the user can understand a concept of restoration after temporary preemption.

Optionally, the electronic device may determine, based on a device feature, experimental data, and the like, the duration T1 in which more attention of the user can be attracted.

Optionally, the electronic device may determine, according to a content amount of the refreshed content, a device feature, experimental data, and the like, stay duration T2 required for the user to complete browsing of the refreshed content and understand the refreshed content.

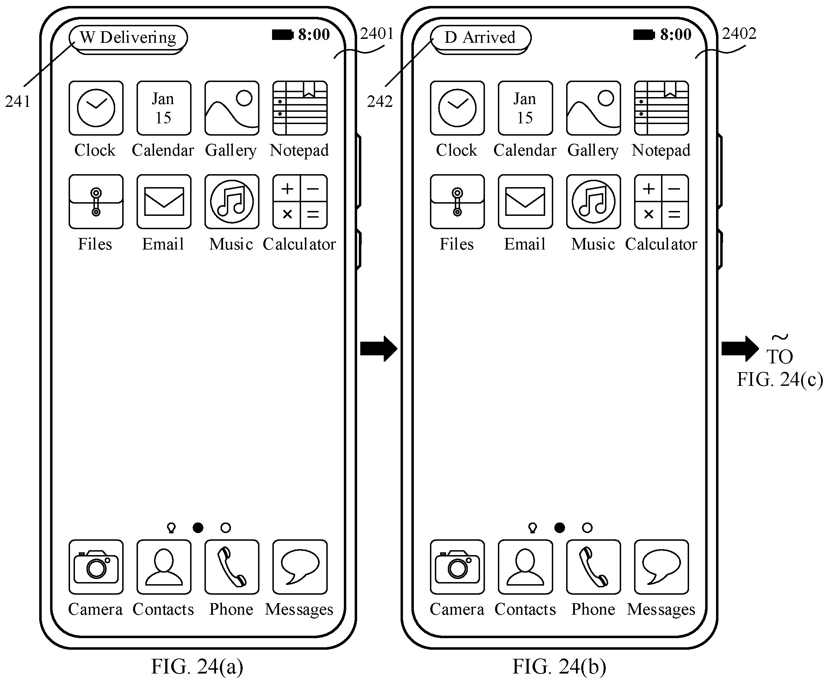

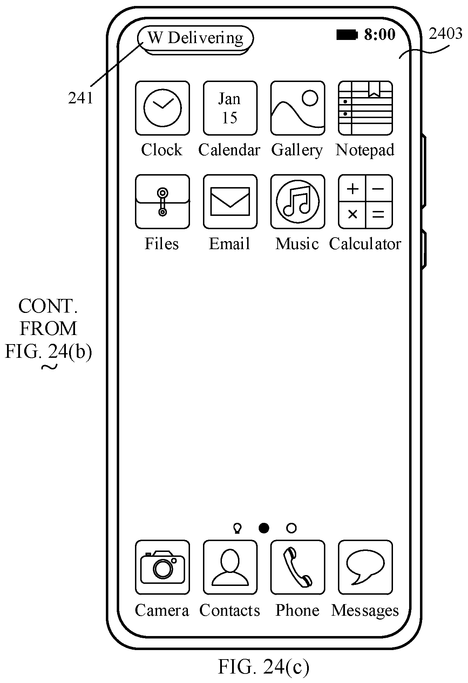

For example, in an interface 2401 shown in FIG. 24(a), the electronic device exposes and displays a food delivery notification 241 at a front position in a status bar in a capsule display manner. At a lower layer of the food delivery notification 241, the electronic device hides and displays a taxi hailing notification 242 at a rear position. In this process, a taxi hailing event generates refreshed content of the taxi hailing notification, and the electronic device determines that the refreshed content is an important update. In this case, in an interface 2402 shown in FIG. 24(b), the taxi hailing notification 242 temporarily preempts the front position of the food delivery notification 241, and the electronic device displays the taxi hailing notification 242 in the status bar in a capsule display manner. Then, after temporary preemption duration, in an interface 2403 shown in FIG. 24(c), the electronic device restores exposure display of the food delivery notification 241 at the front position, and hides the taxi hailing notification 242 at the rear position.

S2306: The electronic device refreshes the live notification A.

In some embodiments, after obtaining the refreshed content, the electronic device determines that the refreshed content does not need to be immediately notified to the user, that is, the refreshed content is not an important update. In this case, the electronic device may refresh displayed content of the live notification A, and maintain a display state in which the live notification A is hidden or stacked. Subsequently, when determining that the live notification A needs to be exposed and displayed, the electronic device may display the refreshed displayed content of the live notification A.

In this way, the electronic device adjusts, based on a change status of a live notification, a display sequence of a plurality of displayed live notifications, to ensure display timeliness of the live notifications, and prevent the user from missing an important live notification. It is convenient for the user to focus on the most important notification progress and not to miss important updated content from other notifications.

In addition, the overall solution takes into account an advantage of fixed sorting for easy user search and allows the user to obtain more comprehensive information through a temporary preemption mechanism to avoid missing important content.

In some embodiments, with development of terminal technologies, forms of electronic devices are increasingly diversified. Therefore, display effect adaptation may be performed based on characteristics of electronic devices of different forms, so that optimal display experience is provided for the user while display space is fully utilized.

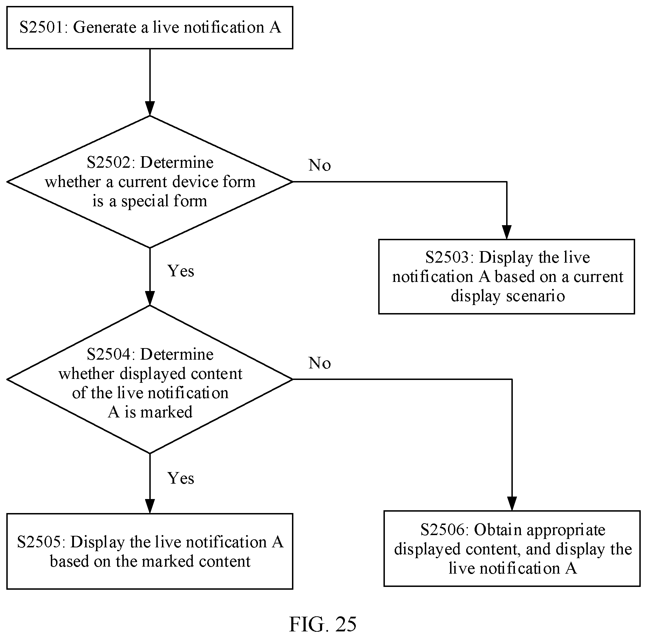

For example, FIG. 25 is a schematic flowchart of another notification display method according to an embodiment of this application. As shown in FIG. 25, the method includes the following steps.

S2501: An electronic device generates a live notification A.

S2502: The electronic device determines whether a current device form is a special form. If yes, step S2504 is performed. If no, step S2503 is performed.

A form of the electronic device may be classified into a common form and the special form. The special form is, for example, a device form of a display with an excessively large size or an excessively small size, or a device form of a display with a special shape. For example, for a folded screen or a tablet computer device of an ultra-wide status bar, or a small folded external screen or a watch device of a small circular screen, and these devices are devices of the special form. In addition, a device form other than the special form is the common form.

Optionally, a distinguishing rule between the common form and the special form may be preset in the electronic device. The electronic device can determine, according to the distinguishing rule, that a device form of the electronic device is the common form or the special form.

In some embodiments, after determining to generate the live notification A, the electronic device may determine the current device form. If the current device form is the common form, the live notification A may be directly displayed based on a display scenario, in other words, step S2503 is performed. If the current device form is the special form, marked content may be determined to adjust display of the live notification A, in other words, step S2504 is performed.

S2503: The electronic device displays the live notification A based on a current display scenario.

In some embodiments, after determining that the live notification A is generated, the electronic device determines that the current device form is the common form, and may display the live notification A based on the current display scenario according to the related method in the foregoing embodiments.

S2504: The electronic device determines whether displayed content of the live notification A is marked. If yes, step S2505 is performed. If no, step S2506 is performed.

S2505: The electronic device displays the live notification A based on the marked content.

S2506: The electronic device obtains appropriate displayed content, and displays the live notification A.

In some embodiments, in comparison with an electronic device in a common form, some electronic devices in a special form that have a large display size may display more notification content, and some electronic devices in a special form that have a small display size may display less notification content. Therefore, in a service, different notification displayed content may be preconfigured and marked for an electronic device in a common form and an electronic device in a special form.

In some embodiments, when determining that the electronic device is the electronic device in a special form, the electronic device determines to generate the live notification A. In this case, the electronic device may determine whether the live notification A has marked the displayed content corresponding to the current special form. If the displayed content is marked, the electronic device may directly display the live notification A based on the displayed content marked by the service side (in other words, step S2505 is performed). If the displayed content is not marked, the electronic device may directly extract, according to a display requirement of the device in a special form, appropriate information from notification displayed content corresponding to an original electronic device in a common form, to display the live notification A (in other words, step S2506 is performed).

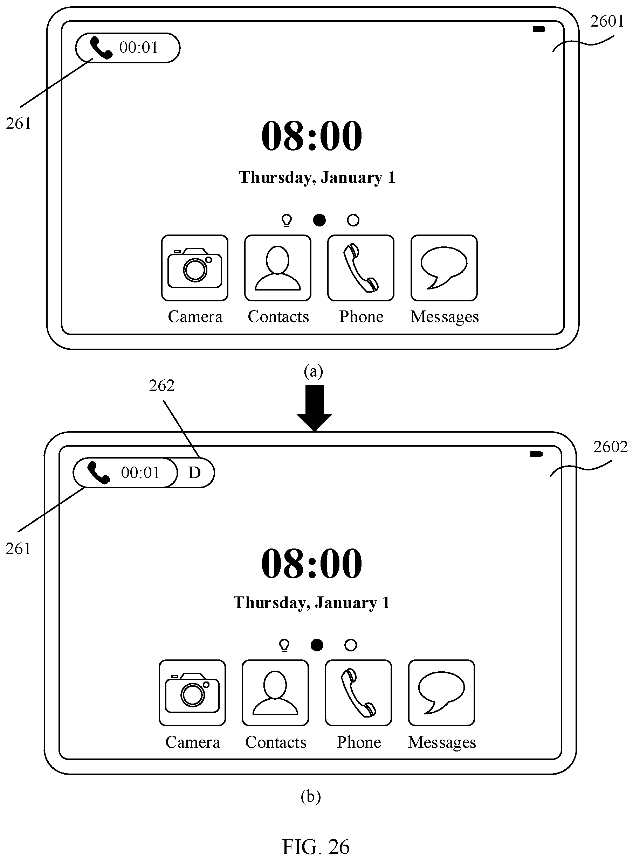

For example, in an interface 2601 shown in (a) in FIG. 26, a tablet computer generates a taxi hailing notification 262 in a process in which a status bar displays a call notification 261. The tablet computer determines that the tablet computer is an electronic device in a special form, and may determine whether a taxi hailing application has marked displayed content that is of the taxi hailing notification 262 and that corresponds to the device in a special form. If yes, the tablet computer may obtain the marked content. Then, in an interface 2602 shown in (b) in FIG. 26, the electronic device determines a display priority of the notification according to a preset sorting rule. For example, a display priority of the call notification 261 is higher than a display priority of the taxi hailing notification 262. In this case, the tablet computer may display the call notification 261 on the top of the status bar in a capsule display manner, and display the taxi hailing notification 262 in a stacked manner at a lower layer of the call notification 261. In addition, a width of the tablet computer is greater than that of a common mobile phone. Therefore, a part or all of a display area of the stacked taxi hailing notification 262 may also be exposed and displayed. In addition to the tablet computer, another type of electronic device with a large screen, for example, a foldable mobile phone, a scroll screen mobile phone, a PC, or a notebook computer, may also use a capsule stacking design shown in FIG. 26.

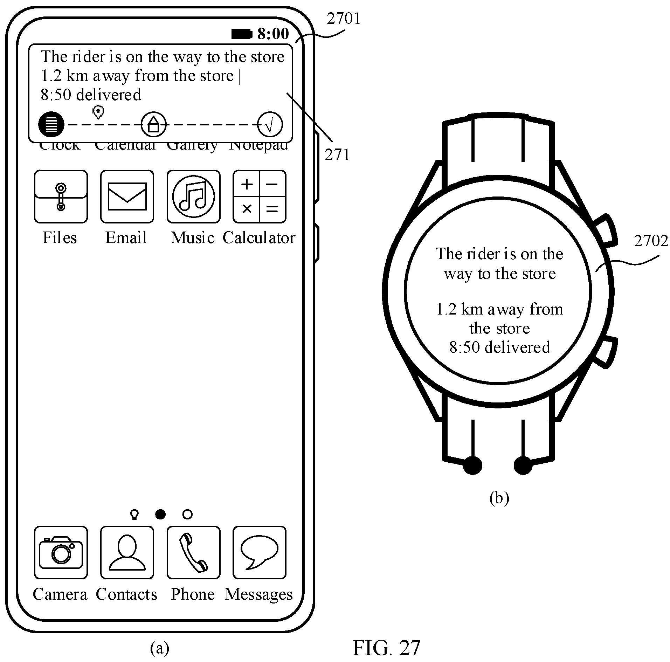

For another example, in a scenario shown in FIG. 27, a watch generates a food delivery notification 271, determines that the watch is an electronic device in a special form, and may determine whether a food delivery application has marked displayed content that is of the food delivery notification 271 and that corresponds to the device in a special form. If not marked, the displayed content of the food delivery notification 271 in the device in a common form in an interface 2701 shown in (a) in FIG. 27 is displayed. The watch may extract displayed content based on the displayed content of the food delivery notification 271 in the device in a common form and based on a size of a display of the watch. In an interface 2702 shown in (b) of FIG. 27, the watch displays a food delivery notification obtained after appropriate displayed content is removed.

In this way, by adapting to a display requirement of a device in a special form, displayed content of an original notification is simplified, and key content is highlighted to adapt to a device form, so that the user can quickly obtain important content.

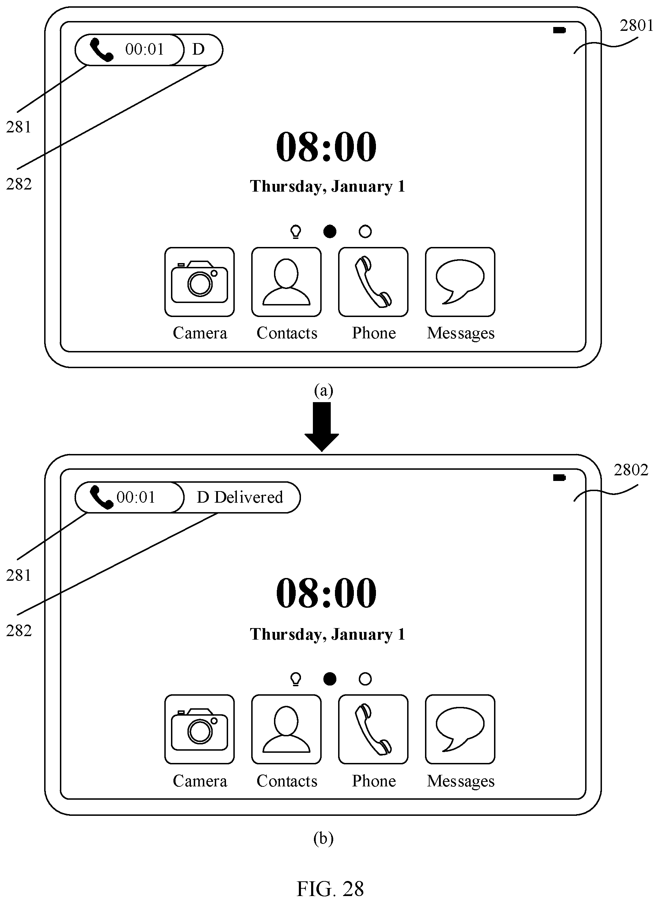

For example, the temporary preemption mechanism described in FIG. 23 is also applicable to the electronic device in a special form. In an interface 2801 shown in (a) in FIG. 28, a tablet computer displays a call notification 281 on a top of a status bar in a capsule display manner, and displays a taxi hailing notification 282 in a stacked manner at a lower layer of the call notification 281. In this process, the tablet computer obtains refreshed content of the taxi hailing notification 282, and determines that the refreshed content is an important update and needs to be exposed and displayed. The tablet computer determines that the call notification 281 is an important item and needs to be displayed on top. In this case, in an interface 2802 shown in (b) in FIG. 28, the tablet computer determines that the tablet computer is a device in a special form, and supports displaying of a plurality of capsule notifications in the status bar. In this case, as shown in the interface 2802, the tablet computer may expand and display the taxi hailing notification 282. Alternatively, the tablet computer may enable the taxi hailing notification 282 to preempt a pinned display position of the call notification 281. However, similar to the display manner shown in the interface 2802, the tablet computer also displays the call notification 281 at a lower layer of the taxi hailing notification 282.

In this way, for the device in a special form, notification display may be flexibly implemented based on a device feature, to present a notification display style that is most convenient to view and use.

In the foregoing embodiments, a corresponding method implementation process is described by using a partial display form as an example. It should be understood that the notification display method provided in embodiments of this application is not limited to the partial display form in the foregoing examples, but may be applied to more display forms. For example, the electronic device is a VR/AR device. In this case, the electronic device may support information presentation of a 3D model. For example, a notification of a food delivery application displayed by the VR/AR device includes 3D model presentation, for example, a takeout small person model is riding an e-bike and is approaching.

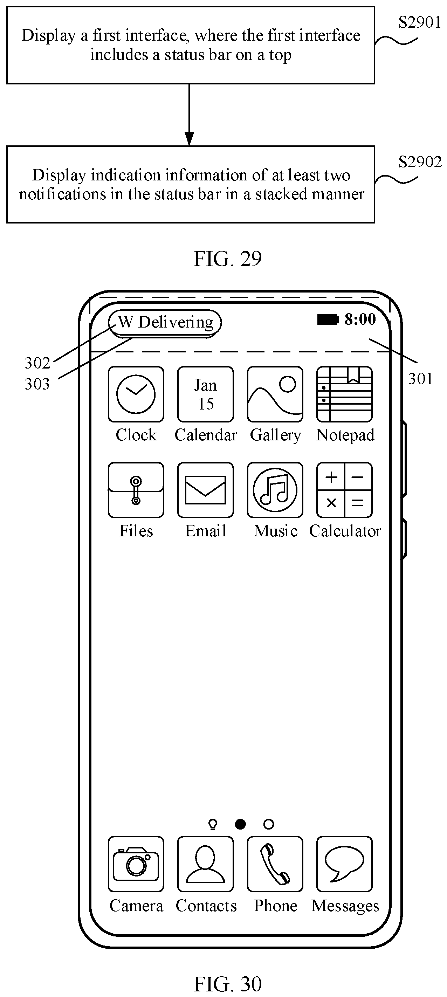

FIG. 29 is a schematic flowchart of a notification display method according to an embodiment of this application. It should be noted that the method is not limited to a specific sequence described in FIG. 29 and below. It should be understood that in another embodiment, a sequence of some steps in the method may be exchanged based on an actual requirement, or some steps in the method may be omitted or deleted. The method includes the following steps.

S2901: An electronic device displays a first interface, where the first interface includes a status bar on a top.

For example, in a first interface shown in FIG. 30, the first interface may be a home screen, an application interface, or the like. The top of the first interface includes a status bar 301. The status bar 301 may be used to display status information of the electronic device, such as time, a battery level, and a network connection status.

S2902: The electronic device displays indication information of at least two notifications in the status bar in a stacked manner.

The indication information of the at least two notifications includes indication information of a first notification and indication information of a second notification. The stacked manner includes that the indication information of the first notification partially or completely covers the indication information of the second notification, or the indication information of the second notification partially or completely covers the indication information of the first notification.

For example, in the first interface shown in FIG. 30, the electronic device displays indication information 302 of a first notification and indication information 303 of a second notification in the status bar 301. The indication information 302 of the first notification partially covers the indication information 303 of the second notification.

In this way, a plurality of notifications are displayed in the status bar in the stacked manner, so that display space of the status bar is saved while it is ensured that a user can detect the notifications in a timely manner.

Optionally, the first notification and the second notification are live notifications.

In some embodiments, both the indication information of the first notification and the indication information of the second notification are in a capsule form, the two pieces of indication information in the capsule form are displayed in the stacked manner, and the stack includes horizontal stack or vertical stack.

In this way, different display forms of live notifications are adapted on different devices, to ensure optimal experience of adapting to a current device. For example, on a device with a narrow display area of a status bar, for example, a mobile phone, capsule notifications are vertically stacked to reduce an occupied display area on the status bar. For another example, on a device with a wide display area of a status bar, for example, a foldable screen/a tablet computer, capsule notifications are horizontally stacked to display richer content.

In some embodiments, the indication information not only indicates the application that sends the first notification or the second notification, but also indicates the content of the first notification or the content of the second notification.

For example, the indication information includes information such as an icon of the application that sends the first notification or the second notification, partial content of the first notification or partial content of the second notification, and a color (for example, a capsule color, a widget color, or a text color) of the first notification or the second notification.

In some embodiments, the electronic device determines, according to a sorting rule, that the stacked manner of the indication information of the at least two notifications is that the indication information of the first notification partially or completely covers the indication information of the second notification, or the indication information of the second notification partially or completely covers the indication information of the first notification. Then, the electronic device displays the indication information of the at least two notifications in the status bar in the stacked manner.

Optionally, the sorting rule includes one or more of the following rules: creation time of a notification, update time of a notification, an importance degree of a notification, a priority of a notification, historical data of a notification viewed by a user, or a notification sequence manually set by a user.

For example, when the sorting rule is the update time of the notification, if update time of the first notification is later than update time of the second notification, it is determined that the stacked manner is that the indication information of the first notification partially or completely covers the indication information of the second notification; or if update time of the second notification is later than update time of the first notification, it is determined that the stacked manner is that the indication information of the second notification partially or completely covers the indication information of the first notification.

For example, in a process of displaying the indication information of the first notification in the status bar, the electronic device receives the second notification, and then the indication information of the second notification may partially or completely cover the indication information of the first notification in the status bar. Alternatively, in a process in which the indication information of the second notification partially or completely covers the indication information of the first notification in the status bar, the electronic device determines to update the indication information of the first notification, and then the indication information of the first notification may partially or completely cover the indication information of the second notification.

In this way, the electronic device exposes and displays a latest updated notification based on the update time of the notification, to ensure that the user can view the latest updated notification in a timely manner.

For another example, when the sorting rule is the importance degree of the notification, if an importance degree of the first notification is greater than or equal to an importance degree of the second notification, it is determined that the stacked manner is that the indication information of the first notification partially or completely covers the indication information of the second notification; or if an importance degree of the first notification is less than or equal to an importance degree of the second notification, it is determined that the stacked manner is that the indication information of the second notification partially or completely covers the indication information of the first notification.

Optionally, the electronic device determines the importance degree of the notification based on an importance degree of an application that generates the notification. For example, some important applications such as a call application are preset. In this case, after obtaining a notification of the call application, the electronic device may determine that an importance degree of the notification of the call application is higher than that of a notification currently displayed in the status bar, and the notification of the call application may partially or completely cover the notification currently displayed in the status bar.

Alternatively, the electronic device determines the importance degree of the notification based on a notification type. For example, an importance degree of a notification generated by an application of a preset application type is higher, or an importance degree of a notification generated based on updates (for example, updates on a status of a food delivery process) is higher.

In this way, the electronic device exposes and displays a notification with a higher importance degree based on the importance degree of the notification, to ensure that the user can view the notification with the higher importance degree in a timely manner.

For another example, when the sorting rule is the priority of the notification, if a priority of the first notification is higher than or equal to a priority of the second notification, it is determined that the stacked manner is that the indication information of the first notification partially or completely covers the indication information of the second notification; or if a priority of the first notification is lower than or equal to a priority of the second notification, it is determined that the stacked manner is that the indication information of the second notification partially or completely covers the indication information of the first notification.

Optionally, the electronic device may preset a priority sequence of notifications of different types of applications, a priority sequence of different types of notifications, and the like.

In this way, the electronic device exposes and displays a notification with a higher display priority based on the priority of the notification, to ensure that the user can view the notification with the higher priority in a timely manner.

In some examples, the electronic device displays the first interface, and the indication information of the first notification is displayed in the status bar of the first interface. After generating the indication information of the second notification, the electronic device determines a display priority sequence of the indication information of the first notification and the indication information of the second notification according to a sorting rule. Then, the electronic device displays the indication information of the first notification and the indication information of the second notification in the status bar based on the display priority sequence.

In some examples, because display space in the status bar is limited, the electronic device may preset a first quantity of display positions in the status bar. The first quantity of display positions may be used to expose and display corresponding notifications, and there may be more notifications that are displayed in the stacked manner, for example, are partially or completely covered and displayed at the first quantity of display positions.

For example, a quantity of pieces of indication information of the first notification is greater than or equal to the first quantity. If a display priority of the indication information of the second notification is higher than or equal to a display priority of the indication information of the first notification, a display position of the indication information of the first notification is preempted, to expose and display the indication information of the second notification; or
if a display priority of the indication information of the second notification is lower than or equal to a display priority of the indication information of the first notification, the indication information of the second notification is not displayed, or the indication information of the second notification is displayed in a stacked manner, so that the indication information of the first notification partially or completely covers the indication information of the second notification.

In other words, when the display space is insufficient, a notification with a high display priority is preferentially exposed and displayed.

It should be understood that when the quantity of first notifications is greater than the first quantity, some first notifications are displayed in a stacked manner. In this case, when the second notification with a higher display priority preempts the display position of the first notification, the display position of the first notification that is already exposed and displayed is preempted, instead of the display position of the first notification that is displayed in a stacked manner, to ensure that the second notification with the higher display priority can be exposed and displayed.

For another example, when the quantity of pieces of indication information of the first notification is less than the first quantity, the electronic device exposes and displays the indication information of the first notification and the indication information of the second notification.

In other words, when the display space is sufficient, all to-be-displayed notifications may be exposed and displayed.

In this way, display priorities of different notifications are determined according to the sorting rule, to ensure that a notification with a higher display priority is preferentially displayed, and determine that the user can view the notification with the higher display priority in a timely manner.

In some embodiments, when the indication information of the first notification partially covers the indication information of the second notification, it is detected that content of the second notification changes, and then the stacked manner is updated, so that the indication information of the second notification partially or completely covers the indication information of the first notification; or when the indication information of the second notification partially covers the indication information of the first notification, it is detected that content of the first notification changes, and then the stacked manner is updated, so that the indication information of the first notification partially or completely covers the indication information of the second notification.

The stacked manner is updated for an (N+1)^{th} time within preset duration after the stacked manner is updated for an N^{th} time, so that the stacked manner returns to a state before the stacked manner is updated for the N^{th} time, where N is a positive integer.

For example, the electronic device displays the indication information of the first notification and the indication information of the second notification in the status bar in the stacked manner, where the indication information of the first notification partially or completely covers the indication information of the second notification. Then, the electronic device determines that the content of the second notification changes, and the stacked manner needs to be updated for the first time. In this case, the electronic device may enable the indication information of the second notification to partially or completely cover the indication information of the first notification. Then, within the preset duration, the electronic device still needs to display the indication information of the first notification and the indication information of the second notification, and determines that the content of the first notification changes and the stacked manner needs to be updated for the second time. In this case, the electronic device may return the stacked manner to a state before the first update, for example, the indication information of the first notification partially or completely covers the indication information of the second notification.

In some examples, when the indication information of the second notification is not displayed or displayed in the stacked manner, refreshed content of the indication information of the second notification is obtained. Within preset duration, the display position of the indication information of the first notification is preempted, to expose and display the refreshed content of the indication information of the second notification.

Optionally, the refreshed content is refreshed content that meets a first condition in a plurality of pieces of refreshed content of the indication information of the second notification, and the first condition includes that the refreshed content is refreshed content of a preset node, or the refreshed content is refreshed content of a preset type.

For example, in an interface 2401 shown in FIG. 24(a), the electronic device exposes and displays a food delivery notification 241 at a front position in a status bar in a capsule display manner. At a lower layer of the food delivery notification 241, the electronic device hides and displays a taxi hailing notification 242 at a rear position. For example, the food delivery notification 241 partially covers the taxi hailing notification 242. In this process, a taxi hailing event generates refreshed content of the taxi hailing notification, and the electronic device determines that the refreshed content is an important update. In this case, in an interface 2402 shown in FIG. 24(b), the taxi hailing notification 242 temporarily preempts the front position of the food delivery notification 241, and the electronic device displays the taxi hailing notification 242 in the status bar in a capsule display manner. Then, after temporary preemption duration, in an interface 2403 shown in FIG. 24(c), the electronic device restores exposure display of the food delivery notification 241 at the front position, and hides the taxi hailing notification 242 at the rear position.

In this way, in a scenario in which a plurality of live notifications need to be displayed at the same time and display space is limited, the electronic device may temporarily display, by preempting a display position, notification content that is ranked at a bottom but has an important update, to implement prompt to the user in a timely manner.

In some embodiments, when it is detected that a first preset condition corresponding to the first notification is met or when it is detected that a second preset condition corresponding to the second notification is met, the indication information of the first notification or the indication information of the second notification is displayed in the status bar on the top.

Optionally, the first preset condition or the second preset condition includes that predetermined time arrives, or that the content of the first notification or the content of the second notification is substantially updated.

For example, after determining that the live notification is received, the electronic device displays the live notification in the status bar.

For another example, an event A for which a live notification is generated is a predetermined occurrence event, and then the electronic device may display a live notification of the event A based on actual occurrence time of the event A. For example, the event A is a high-speed railway ticket booking event. If the high-speed railway ticket booking event occurrence time is five days before actual departure time, it can be learned that the electronic device may determine, based on the actual departure time, that the live notification of the event A is a predetermined live notification. In this case, the electronic device may display the live notification of the event A at delayed time. For example, if a preset rule is that a live notification corresponding to ticket information is displayed three hours before actual departure, the electronic device determines, based on actual departure time T1 and advance duration T2, that time for displaying the live notification is (T1-T2).

For another example, after determining that content of a notification is substantially updated, for example, updated content is generated after a preset node arrives, the electronic device notifies.

In this way, while it is ensured that the user views the notification in a timely manner, excessive useless notifications are not generated to affect the user.

In some embodiments, in a process in which the electronic device displays the interface of the first application, in response to an operation performed by the user on the indication information of the at least two notifications displayed in the stacked manner, detailed information about the first notification and/or detailed information about the second notification are/is displayed in the interface of the first application in a floating manner.

Optionally, the detailed information is carried in a widget form.

For example, in an interface 2201 shown in FIG. 22(a), the electronic device displays a food delivery notification 221 in a status bar by using a capsule, and there is further a taxi hailing notification blocked by the food delivery notification 221 in the status bar. In response to an operation performed by the user on the food delivery notification 221, in an interface 2202 shown in FIG. 22(b), the electronic device may expand and display details pages of the plurality of notifications displayed in the status bar by using the capsule. For example, the electronic device displays the food delivery notification 221 and the taxi hailing notification 222 by using a floating widget. Optionally, the plurality of floating widgets may be displayed in a style like tiled, stacked, or 3D in-depth display.

In this way, when using another application or browsing a desktop, the user may pay attention to an event progress based on status bar capsule information. Optionally, if the user needs to learn of more detailed information, the user may also tap (where the tap is used as an example, and the operation may be actually defined as any simple operation that meets user's intuition) the status bar capsule, so that the electronic device expands a floating widget list for viewing or a convenient operation. This meets a requirement of the user for viewing notification details. In addition, a current task is not interrupted when a floating widget is expanded for displaying.

In some embodiments, after expanding and displaying detailed information about the at least two notifications in response to the user operation, the electronic device stops displaying the indication information of the at least two notifications in the status bar on the top.

In some embodiments, if a first operation for the detailed information about the first notification or the detailed information about the second notification is received, the electronic device displays, in response to the first operation, a function interface of an application that sends the first notification or the second notification, where the function interface is related to the first notification or the second notification; or if a second operation is received, the electronic device stops displaying the detailed information about the first notification and/or the detailed information about the second notification in response to the second operation, and the electronic device displays the indication information of the at least two notifications.

For example, in an interface 1301 shown in FIG. 13(a), in a process in which the electronic device displays a capsule 131 corresponding to a food delivery event, the electronic device detects an operation of tapping the capsule 131 by the user, and then the electronic device can display an interface 1302 shown in FIG. 13(b). In the interface 1302, the electronic device displays a widget 132 corresponding to the capsule 131. In comparison with the capsule 131, a display area of the widget 132 is larger, and more content of the food delivery event can be displayed, to help the user learn of more related information of the food delivery event. Then, in the interface 1302 shown in FIG. 13(b), in a process of displaying the widget 132 corresponding to the capsule 131, the electronic device detects the operation performed by the user on the blank display area 133 in the widget 132, and determines that the widget 132 displays a notification corresponding to the food delivery event. In this case, in an interface 1303 shown in FIG. 13(c), the electronic device may start a food delivery application that generates the food delivery event, and display the event details page corresponding to the notification content displayed on the widget 132, to help the user learn of the related information of the food delivery event in more detail.

Alternatively, in the interface 1302 shown in FIG. 13(b), in a process of displaying the widget 132 corresponding to the capsule 131, the electronic device detects an operation performed by the user on the home screen, and may stop displaying the widget 132, and restore displaying of the capsule 131.

In this way, a plurality of operations for notifying the capsule are preset in the electronic device, to meet a plurality of display requirements of the user.

In some embodiments, when there are a plurality of live notifications at the same time, the electronic device may adapt and display the plurality of live notifications at a plurality of positions based on a current display scenario, so that the user can quickly browse required content.

Optionally, the display scenarios include a full-screen AOD, a partial AOD, a functional AOD, a lock screen, a notification center, a status bar, a floating widget, desktop display, and the like. The display style includes capsule display, widget display, visual image display, and the like.

For example, a notification center is expanded and displayed in response to an operation performed by the user on the status bar, where the notification center includes the indication information of the at least two notifications or the detailed information about the at least two notifications, and a display manner of the indication information of the at least two notifications or the detailed information about the at least two notifications includes tile display, stacked display, or 3D display.

For another example, the electronic device enters a screen-off state and displays a screen-off interface, where the screen-off interface includes the indication information of the at least two notifications or the detailed information about the at least two notifications, and the display manner of the indication information of the at least two notifications or the detailed information about the at least two notifications includes tile display, stacked display, or 3D display.

For another example, the electronic device enters a screen-locked state and displays a lock screen, where the lock screen includes the indication information of the at least two notifications or the detailed information about the at least two notifications, and the display manner of the indication information of the at least two notifications or the detailed information about the at least two notifications includes tile display, stacked display, or 3D display.

In some embodiments, when the indication information of the first notification partially covers the indication information of the second notification, in response to an operation performed by the user on a first control in the indication information of the first notification, a first task is executed by using a second application corresponding to the first notification; or when the indication information of the second notification partially covers the indication information of the first notification, in response to an operation performed by the user on a second control in the indication information of the second notification, a second task is executed by using a third application corresponding to the second notification.

Optionally, there is at least one first control or second control.

For example, in an interface 1401 shown in FIG. 14(a), in a process in which the electronic device displays a capsule 141 corresponding to a call event, the electronic device detects an operation performed by the user on the capsule 141, displays an interface 1402 shown in FIG. 14(b), and displays, in the interface 1402, a widget 142 corresponding to the capsule. Then, the electronic device detects an operation performed by the user on a hang up control 143 displayed on the widget 142, and determines that the user instructs to hang up the call. In this case, the electronic device may end the call event corresponding to the current widget 142. In addition, in an interface 1403 shown in FIG. 14(c), after the call event ends, the electronic device no longer displays a notification corresponding to the call event, for example, no longer displays the widget 142 or the capsule 141.

Optionally, a more precise keyboard and mouse operation or focus operation function is configured in devices such as a PC and a smart television. This allows the devices to support multi-hot zone button operations in the capsule form. For example, a plurality of operable controls are preset in the capsule notifications, and then the user may implement different functions by using the plurality of controls, thereby meeting more operation requirements of the user.

In some embodiments, the electronic device displays a screen-off interface, where the screen-off interface includes a function window. A first animation is displayed in the function window, where the first animation corresponds to a first notification.

Optionally, a second animation is also displayed in the function window in a stacked manner, the second animation corresponds to a second notification, and the stacked manner includes that the first animation partially or completely covers the second animation, or the second animation partially or completely covers the first animation.

Optionally, the first animation is a 2D animation or a 3D animation.

For example, the electronic device is a VR/AR device. In this case, the electronic device may support information presentation of a 3D model. For example, a notification of a food delivery application displayed by the VR/AR device includes 3D model presentation, for example, a takeout small person model is riding an e-bike and is approaching.

For example, as shown in FIG. 6, in a process of displaying a screen-off interface 601, the electronic device receives an event A, and determines that the event A is an instant occurrence event, and a live notification corresponding to the event A needs to be immediately displayed. In this case, the electronic device may display, by using a visual image, a live notification corresponding to the event A in a function window 61 in the screen-off interface 601 based on a current functional AOD display scenario. For example, if the event A is a food delivery event, a food delivery application may generate a delivery route map corresponding to a food delivery. In this way, the electronic device may display the delivery route map in the function window 61, so that the user can determine a moving position of a rider, estimate delivery time, and the like.

For another example, as shown in (b) in FIG. 20, when displaying a screen-off interface 2002, the electronic device displays a live notification 202 in the function window in a stacked manner. To be specific, while keeping displaying the live notification 201, the electronic device exposes a part of the live notification 202 at a lower layer of the live notification 201, so that the user determines that there are a plurality of live notifications in the current function window.

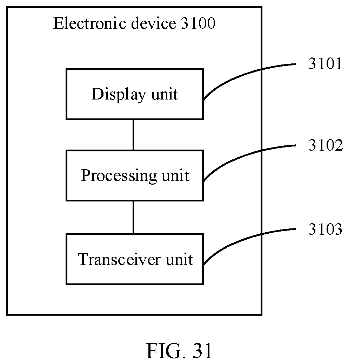

The foregoing describes, in detail with reference to FIG. 3 to FIG. 30, the notification display method provided in embodiments of this application. The following describes in detail the electronic device provided in embodiments of this application with reference to FIG. 31.

In a possible design, FIG. 31 is a diagram of a structure of an electronic device according to an embodiment of this application. As shown in FIG. 31, an electronic device 3100 may include a display unit 3101, a processing unit 3102, and a transceiver unit 3103. The electronic device 3100 may be configured to implement functions of the electronic device in the foregoing method embodiments.

Optionally, the display unit 3101 is configured to support the electronic device 3100 in performing S303 or S304 in FIG. 3, and/or support the electronic device 3100 in performing S703, S704, and S706 in FIG. 7, and/or support the electronic device 3100 in performing S1201, S1202, S1203, and S1204 in FIG. 12, and/or support the electronic device 3100 in performing S1603, S1605, S1607, and S1608 in FIG. 16, and/or support the electronic device 3100 in performing S2303, S2305, and S2306 in FIG. 23, and/or support the electronic device 3100 in performing S2503, S2505, and S2506 in FIG. 25, and/or support the electronic device 3100 in performing S2901 and S2902 in FIG. 29.

Optionally, the processing unit 3102 is configured to support the electronic device 3100 in performing S302 in FIG. 3, and/or support the electronic device 3100 in performing S701, S702, S705, and S706 in FIG. 7, and/or support the electronic device 3100 in performing S1602, S1604, and S1606 in FIG. 16, and/or support the electronic device 3100 in performing S2302 and S2304 in FIG. 23, and/or support the electronic device 3100 in performing S2502 and S2504 in FIG. 25.

Optionally, the transceiver unit 3103 is configured to support the electronic device 3100 in performing S301 in FIG. 3, and/or support the electronic device 3100 in performing S1201, S1203, S1204, and S1205 in FIG. 12, and/or support the electronic device 3100 in performing S1601 in FIG. 16, and/or support the electronic device 3100 in performing S2301 in FIG. 23, and/or support the electronic device 3100 in performing S2501 in FIG. 25.

The transceiver unit may include a receiving unit and a sending unit, may be implemented by a transceiver or a transceiver-related circuit component, and may be a transceiver or a transceiver module. Operations and/or functions of the units in the electronic device 3100 are respectively intended to implement corresponding procedures of the notification display method in the foregoing method embodiments. All related content of the steps in the foregoing method embodiments may be referenced to function descriptions of corresponding functional units. For brevity, details are not described herein again.

Optionally, the electronic device 3100 shown in FIG. 31 may further include a storage unit (not shown in FIG. 31), and the storage unit stores a program or instructions. When the display unit 3101, the processing unit 3102, and the transceiver unit 3103 execute the program or the instructions, the electronic device 3100 shown in FIG. 31 can perform the notification display method in the foregoing method embodiments.

For technical effects of the electronic device 3100 shown in FIG. 31, refer to the technical effects of the notification display method in the foregoing method embodiments. Details are not described herein again.

In addition to a form of the electronic device 3100, the technical solutions provided in this application may also be a functional unit or a chip in the electronic device, or an apparatus that matches the electronic device.

An embodiment of this application further provides a chip system, including a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the notification display method in the foregoing embodiments.

An embodiment of this application further provides a computer program product. When the computer program product is run on a computer, the computer is enabled to perform the foregoing related steps, to implement the notification display method in the foregoing embodiments.

In addition, an embodiment of this application further provides an apparatus. The apparatus may be specifically a component or a module, and the apparatus may include one or more processors and a memory that are connected to each other. The memory is configured to store a computer program. When the computer program is executed by one or more processors, the apparatus is enabled to perform the notification display method in the foregoing method embodiments.

The apparatus, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A notification display method, applied to an electronic device, wherein the method comprises:
displaying a first interface, wherein the first interface comprises a status bar on a top; and
displaying indication information of at least two notifications in the status bar in a stacked manner, wherein the indication information of the at least two notifications comprises indication information of a first notification and indication information of a second notification, and the stacked manner comprises that the indication information of the first notification partially or completely covers the indication information of the second notification, or the indication information of the second notification partially or completely covers the indication information of the first notification.

2. The method according to claim 1, wherein before displaying the indication information of the at least two notifications in the status bar in the stacked manner, the method further comprises:
determining, according to a sorting rule, that the stacked manner of the indication information of the at least two notifications is that the indication information of the first notification partially or completely covers the indication information of the second notification, or the indication information of the second notification partially or completely covers the indication information of the first notification.

3. The method according to claim 2, wherein the sorting rule comprises one or more of the following rules: creation time of a notification, update time of a notification, an importance degree of a notification, a priority of a notification, historical data of a notification viewed by a user, or a notification sequence manually set by a user.

4. The method according to claim 3, wherein when the sorting rule is the update time of the notification,
if update time of the first notification is later than update time of the second notification, it is determined that the stacked manner is that the indication information of the first notification partially or completely covers the indication information of the second notification; or
if update time of the second notification is later than update time of the first notification, it is determined that the stacked manner is that the indication information of the second notification partially or completely covers the indication information of the first notification; or
when the sorting rule is the importance degree of the notification,
if an importance degree of the first notification is greater than or equal to an importance degree of the second notification, it is determined that the stacked manner is that the indication information of the first notification partially or completely covers the indication information of the second notification; or
if an importance degree of the first notification is less than or equal to an importance degree of the second notification, it is determined that the stacked manner is that the indication information of the second notification partially or completely covers the indication information of the first notification; or
when the sorting rule is the priority of the notification,
if a priority of the first notification is higher than or equal to a priority of the second notification, it is determined that the stacked manner is that the indication information of the first notification partially or completely covers the indication information of the second notification; or
if a priority of the first notification is lower than or equal to a priority of the second notification, it is determined that the stacked manner is that the indication information of the second notification partially or completely covers the indication information of the first notification.

5. The method according to any one of claims 1 to 4, wherein
when the indication information of the first notification partially covers the indication information of the second notification, it is detected that content of the second notification changes, and then the stacked manner is updated, so that the indication information of the second notification partially or completely covers the indication information of the first notification; or
when the indication information of the second notification partially covers the indication information of the first notification, it is detected that content of the first notification changes, and then the stacked manner is updated, so that the indication information of the first notification partially or completely covers the indication information of the second notification.

6. The method according to claim 5, wherein
the stacked manner is updated for an (N+1)^{th} time within preset duration after the stacked manner is updated for an N^{th} time, so that the stacked manner returns to a state before the stacked manner is updated for the N^{th} time, wherein N is a positive integer.

7. The method according to any one of claims 1 to 6, wherein displaying the indication information of the at least two notifications in the status bar on the top in the stacked manner comprises:
when it is detected that a first preset condition corresponding to the first notification is met or when it is detected that a second preset condition corresponding to the second notification is met, displaying the indication information of the first notification or the indication information of the second notification in the status bar on the top.

8. The method according to claim 7, wherein the first preset condition or the second preset condition comprises that predetermined time arrives, or that the content of the first notification or the content of the second notification is substantially updated.

9. The method according to any one of claims 1 to 8, wherein the method further comprises:
displaying an interface of a first application; and
in response to an operation performed by the user on the indication information of the at least two notifications displayed in the stacked manner, displaying detailed information about the first notification and/or detailed information about the second notification in the interface of the first application in a floating manner.

10. The method according to claim 9, wherein the detailed information is carried in a widget form.

11. The method according to claim 9 or 10, wherein the method further comprises:
stopping displaying the indication information of the at least two notifications in the status bar on the top; and
if a first operation for the detailed information about the first notification or the detailed information about the second notification is received, in response to the first operation, displaying a function interface of an application that sends the first notification or the second notification, wherein the function interface is related to the first notification or the second notification; or
if a second operation is received, in response to the second operation, stopping displaying the detailed information about the first notification and/or the detailed information about the second notification, and displaying the indication information of the at least two notifications.

12. The method according to any one of claims 1 to 11, wherein the method further comprises:
expanding and displaying a notification center in response to an operation performed by the user on the status bar, wherein the notification center comprises the indication information of the at least two notifications or detailed information about the at least two notifications, and a display manner of the indication information of the at least two notifications or the detailed information about the at least two notifications comprises tile display, stacked display, or 3D display.

13. The method according to any one of claims 1 to 12, wherein the method further comprises:
entering, by the electronic device, a screen-off state and displaying a screen-off interface, wherein the screen-off interface comprises the indication information of the at least two notifications or the detailed information about the at least two notifications, and the display manner of the indication information of the at least two notifications or the detailed information about the at least two notifications comprises tile display, stacked display, or 3D display.

14. The method according to any one of claims 1 to 13, wherein the method further comprises:
entering, by the electronic device, a screen-locked state and displaying a lock screen, wherein the lock screen comprises the indication information of the at least two notifications or the detailed information about the at least two notifications, and the display manner of the indication information of the at least two notifications or the detailed information about the at least two notifications comprises tile display, stacked display, or 3D display.

15. The method according to any one of claims 1 to 8, wherein both the indication information of the first notification and the indication information of the second notification are in a capsule form, the two pieces of indication information in the capsule form are displayed in the stacked manner, and the stack comprises horizontal stack or vertical stack.

16. The method according to any one of claims 1 to 15, wherein the indication information not only indicates the application that sends the first notification or the second notification, but also indicates the content of the first notification or the content of the second notification.

17. The method according to any one of claims 1 to 16, wherein the method further comprises:
when the indication information of the first notification partially covers the indication information of the second notification, in response to an operation performed by the user on a first control in the indication information of the first notification, executing a first task by using a second application corresponding to the first notification; or
when the indication information of the second notification partially covers the indication information of the first notification, in response to an operation performed by the user on a second control in the indication information of the second notification, executing a second task by using a third application corresponding to the second notification.

18. The method according to claim 17, wherein there is at least one first control or second control.

19. A notification display method, applied to an electronic device, wherein the method comprises:
displaying a first interface, wherein indication information of a first notification is displayed in a status bar of the first interface;
generating indication information of a second notification;
determining a display priority sequence of the indication information of the first notification and the indication information of the second notification according to a sorting rule; and
displaying the indication information of the first notification and the indication information of the second notification in the status bar based on the display priority sequence.

20. The method according to claim 19, wherein displaying the indication information of the first notification and the indication information of the second notification in the status bar based on the display priority sequence comprises:
displaying the indication information of the first notification and the indication information of the second notification in the status bar in a capsule display manner.

21. The method according to claim 19 or 20, wherein displaying the indication information of the first notification and the indication information of the second notification in the status bar based on the display priority sequence comprises:
if a display priority of the indication information of the second notification is higher than or equal to a display priority of the indication information of the first notification, preempting a display position of the indication information of the first notification, to expose and display the indication information of the second notification; or
if a display priority of the indication information of the second notification is lower than or equal to a display priority of the indication information of the first notification, skipping displaying the indication information of the second notification, or displaying the indication information of the second notification in a stacked manner, so that the indication information of the first notification partially or completely covers the indication information of the second notification.

22. The method according to claim 21, wherein a quantity of display positions in the status bar is a first quantity, and a quantity of pieces of indication information of the first notification is greater than or equal to the first quantity.

23. The method according to claim 22, wherein when the quantity of pieces of indication information of the first notification is less than the first quantity, the method further comprises:
exposing and displaying the indication information of the first notification and the indication information of the second notification.

24. The method according to any one of claims 21 to 23, wherein the method further comprises:
when skipping displaying the indication information of the second notification or displaying the indication information of the second notification in the stacked manner, obtaining refreshed content of the indication information of the second notification; and
preempting, within preset duration, the display position of the indication information of the first notification, to expose and display the refreshed content of the indication information of the second notification.

25. The method according to claim 24, wherein the refreshed content is refreshed content that meets a first condition in a plurality of pieces of refreshed content of the indication information of the second notification, and the first condition comprises that the refreshed content is refreshed content of a preset node, or the refreshed content is refreshed content of a preset type.

26. The method according to any one of claims 19 to 25, wherein the method further comprises:
detecting an operation performed by a user on indication information of a notification displayed in the status bar, and displaying a first widget corresponding to the indication information of the first notification and a second widget corresponding to the indication information of the second notification.

27. The method according to any one of claims 19 to 25, wherein the method further comprises:
detecting an operation performed by a user on a first control in the indication information of the first notification, and executing a first task by using a second application corresponding to the first notification; or
detecting an operation performed by a user on a second control in the indication information of the second notification, and executing a second task by using a third application corresponding to the second notification.

28. The method according to claim 27, wherein there is at least one first control or second control.

29. The method according to any one of claims 19 to 28, wherein the indication information of the second notification meets a second condition, and the second condition comprises that the indication information of the second notification is indication information of a live notification type.

30. A notification display method, applied to an electronic device, wherein the method comprises:
displaying a screen-off interface, wherein the screen-off interface comprises a function window; and
displaying a first animation in the function window, wherein the first animation corresponds to a first notification.

31. The method according to claim 30, wherein a second animation is also displayed in the function window in a stacked manner, the second animation corresponds to a second notification, and the stacked manner comprises that the first animation partially or completely covers the second animation, or the second animation partially or completely covers the first animation.

32. The method according to claim 30 or 31, wherein the first animation is a 2D animation or a 3D animation.

33. The method according to claim 31, wherein the method further comprises:
determining, according to a sorting rule, that the stacked manner of the first animation and the second animation is that the first animation partially or completely covers the second animation, or the first animation partially or completely covers the first animation.

34. The method according to claim 33, wherein the sorting rule comprises one or more of the following rules: creation time of a notification, update time of a notification, an importance degree of a notification, a priority of a notification, historical data of a notification viewed by a user, or a notification sequence manually set by a user.

35. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 1 to 18, or the electronic device is enabled to perform the method according to any one of claims 19 to 29, or the electronic device is enabled to perform the method according to any one of claims 30 to 34.

36. A computer-readable storage medium, wherein the computer-readable storage medium comprises a computer program, and when the computer program is run on an electronic device, the electronic device is enabled to perform the method according to any one of claims 1 to 18, or the electronic device is enabled to perform the method according to any one of claims 19 to 29, or the electronic device is enabled to perform the method according to any one of claims 30 to 34.

37. A computer program product, wherein when the computer program product runs on a computer, the computer is enabled to perform the method according to any one of claims 1 to 34.
